(19) Europäisches Patentamt
European Patent Office
Office européen des brevets

(11) EP 3 622 352 B1

# (12) EUROPÄISCHE PATENTSCHRIFT

(45) Veröffentlichungstag und Bekanntmachung des Hinweises auf die Patenterteilung:
**23.07.2025 Patentblatt 2025/30**

(21) Anmeldenummer: **18720646.1**

(22) Anmeldetag: **07.05.2018**

(51) Internationale Patentklassifikation (IPC):
***G03H 1/02*** *(2006.01)* ***G11B 7/254*** *(2013.01)*
***G11B 7/24044*** *(2013.01)* ***G03H 1/18*** *(2006.01)*
***B32B 27/30*** *(2006.01)* ***B32B 27/40*** *(2006.01)*

(52) Gemeinsame Patentklassifikation (CPC):
**G03H 1/0252; B32B 1/00; B32B 7/12; B32B 15/088; B32B 15/09; B32B 17/06; B32B 21/08; B32B 23/04; B32B 23/042; B32B 23/044; B32B 23/08; B32B 23/20; B32B 27/06; B32B 27/08; B32B 27/20;** (Forts.)

(86) Internationale Anmeldenummer:
**PCT/EP2018/061709**

(87) Internationale Veröffentlichungsnummer:
**WO 2018/206498 (15.11.2018 Gazette 2018/46)**

## (54) SYSTEM AUS ZWEI TROCKEN ÜBERTRAGBAREN UV-HÄRTENDEN LACKSCHICHTEN FÜR DEN SCHUTZ EINES HOLOGRAMMS IN EINEM PHOTOPOLYMER-FOLIENVERBUND

SYSTEM MADE UP OF TWO DRY TRANSFERABLE UV COATINGS FOR PROTECTING A HOLOGRAM IN A PHOTOPOLYMERIC FILM COMPOUND

SYSTÈME CONSTITUÉ DE DEUX COUCHES DE PEINTURES SÈCHES, TRANSFÉRABLES DURCIES AUX UV POUR LA PROTECTION D’UN HOLOGRAMME DANS UN ASSEMBLAGE DE FEUILLES PHOTOPOLYMÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2017 EP 17170206**

(43) Veröffentlichungstag der Anmeldung:
**18.03.2020 Patentblatt 2020/12**

(73) Patentinhaber: **Covestro Deutschland AG**
**51373 Leverkusen (DE)**

(72) Erfinder:
- **KOSTROMINE, Serguei**
  **53913 Swisttal-Buschhofen (DE)**
- **RÖLLE, Thomas**
  **51381 Leverkusen (DE)**
- **FÄCKE, Thomas**
  **51375 Leverkusen (DE)**
- **VETTERLE, Karl**
  **65203 Wiesbaden Biebrich (DE)**

(74) Vertreter: **Levpat**
**c/o Covestro AG**
**Gebäude 4825**
**51365 Leverkusen (DE)**

(56) Entgegenhaltungen:
**EP-A2- 0 949 547** **US-A1- 2016 115 322**
**US-B2- 7 241 494** **US-B2- 9 261 778**

EP 3 622 352 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
**B32B 27/302; B32B 27/304; B32B 27/306; B32B 27/308; B32B 27/32; B32B 27/325; B32B 27/34; B32B 27/36; B32B 27/365; B32B 27/38; B32B 27/40; C08F 2/50; G11B 7/254;** B32B 2255/06; B32B 2255/08; B32B 2255/10; B32B 2255/26; B32B 2270/00; B32B 2307/412; B32B 2307/51; B32B 2307/546; B32B 2307/702; B32B 2307/732; B32B 2307/75; B32B 2310/0831; B32B 2310/0837; B32B 2329/06; B32B 2333/12; B32B 2429/00; B32B 2457/20; B32B 2457/204; B32B 2457/206; B32B 2551/00; G03H 1/0248; G03H 2001/186; G03H 2250/35; G03H 2250/39; G03H 2260/12; G11B 7/24044; G11B 2007/25402

## Beschreibung

Die Erfindung betrifft ein versiegeltes holographisches Medium umfassend einen Schichtaufbau B'-C1'-C2', ein Verfahren zur Herstellung des versiegelten holographischen Mediums, ein Kit-of-parts, sowie deren Verwendung.

Photopolymerschichten zur Herstellung holographischer Medien sind grundsätzlich z.B. aus der WO 2011/054797 und der WO 2011/067057 bekannt. Vorteile dieser holographischen Medien sind deren hohe diffraktive Lichtbeugungseffizienz und eine vereinfachte Verarbeitung, da nach der holographischen Belichtung keine weiteren chemischen und / oder thermischen Entwicklungsschritte nötig sind.

Der holographische Film (Bayfol® HX der Fa. Covestro Deutschland AG) besteht aus einem Filmsubstrat (A) und einer lichtempfindlichen Photopolymerschicht (B). Optische Hologramme werden in der Schicht (B) durch lokale Photopolymerisation gebildet und durch flächige UV-VIS-Belichtung fixiert. So entsteht aus der Schicht (B) eine nicht mehr photoempfindliche durchpolymerisierte Schicht (B') mit einem vorher eingeschriebenen Hologramm. Dieses Hologramm ist zwar an sich auf Dauer sehr stabil, kann aber durch mechanische Einflüsse und / oder bei Kontakt mit z.B. organischen Substanzen (Lösungsmitteln) seine Eigenschaften verändern.

Denkbare Schutz-Methoden sind dabei Lackieren, Laminieren, Aufkleben einer Schutzschicht und / oder einer Schutzfolie. Es entstehen jedoch mannigfaltige Probleme beim klassischen Lackieren oder bei dem Aufkleben verbunden mit flüssigen Lack und / oder Kleber-Komponenten, die bei dem Kontakt mit der (B')-Schicht das Hologramm ganz zerstören oder aufgrund starker optischer Verschiebung unbrauchbar machen.

In der Patentanmeldung EP 2613318 B1 ist beschrieben, dass durch geeignete Auswahl der Komponenten Schutzschichten auf eine belichtete Photopolymerschicht aufgebracht werden können. Diese Schutzschichten lassen sich durch Umsetzung wenigstens eines strahlungshärtenden Harzes I), eines Isocyanat-funktionellen Harzes II) und eines Photoinitiatorsystem III) herstellen. Die in EP 2613318 B1 beschriebenen Schutzschichten erfüllen die Voraussetzungen für eine geeignete Schutzschicht, da sie nach Applikation ermöglichen einen Schichtaufbau mit einer Schutzschicht und einer belichteten Photopolymerschicht bereitzustellen, der mit unterschiedlichsten angrenzenden Schichten wie z.B. Klebstoffschichten fest verbunden werden kann, ohne das es zu einer Volumenänderungen der Photopolymerschicht und einer damit einhergehenden Farbveränderungen des Hologramms kommt. Allerdings wird die Schutzschicht "nass" d.h. als Lösung oder Dispersion auf die Photopolymerschicht aufgebracht. Es ist jedoch in der industriellen Praxis aufwendig, entsprechende Flüssigapplikationsanlagen aufzubauen und Personal bereitzustellen, das den Beschichtungsprozess kontrolliert. Laminierungsverfahren werden daher bevorzugt, haben aber den Nachteil, dass sie oft zu Folienverbünden mit nicht ausreichender Haftung führen.

In den Patentanmeldungen JP2006023455 (A) und JP2006023456 (A) wird ein Medium zur Aufnahme von Hologrammen beschrieben umfassend eine Substratschicht, eine Photopolymerschicht und ein oder zwei Schutzschichten. Die Schutzschicht wird dabei mit der Substratschicht verklebt wodurch die Photopolymerschicht zwischen der Substratschicht und der Schutzschicht eingebettet wird, ohne selbst mit den beiden Schichten verklebt zu sein. Vorzugsweise werden diese geschützten holographischen Medien in ID-Karten eingesetzt. Für die meisten Anwendungen von holographischen Medien wo ein hoher Anspruch an Gleichmäßigkeit und Qualität für die ganze Fläche des holographischen Mediums gilt, ist einen solcher Schichtaufbau nur schwer oder gar nicht zu realisieren.

Einige Anwendungen stellen an die Schutzschicht so hohe Ansprüche, vor allem hinsichtlich Kratz- und Lösemittelbeständigkeit in Kombination mit Biegsamkeit, Elastizität und guter Haftung, dass es schwierig ist, mit einer Schutzschicht allen Ansprüchen gerecht zu werden.

Die Aufgabe der vorliegenden Erfindung bestand somit darin, für belichtete Photopolymerfilme, die keine Nachprozessierungsschritte nach der holographischen Belichtung mehr benötigen, eine Lösung bereitzustellen, nach der diese in einfachen Arbeitsschritten versiegelt werden können, ohne dabei eine nachteilhafte Farbverschiebung von mehr als 10 nm, bevorzugt von mehr als 5 nm zu erzeugen, eine ausgezeichnete Haftung zwischen dem Photopolymer und Schutzschicht gewährleistete ist und die ausgehärte Schutzschicht eine dauerhafte Beständigkeit gegen gängige organische Lösungsmittel, wässrige Säuren und Laugen, Kosmetika, Haushalts- und Industriereinigungsmittel und / oder eine ausreichende Kratzbeständigkeit gegen mechanische Einflüsse sicherstellt.

Diese Aufgabe wird gelöst durch ein versiegeltes holographisches Medium nach Anspruch 1.

Bei der Photopolymerschicht B' handelt es sich um eine Photopolymerschicht in der ein Hologramm, vorzugsweise in Volumenhologramm, einbelichtet wurde und dieses Hologramm dann durch flächige breitbandige UV/VIS-Belichtung fixiert wurde, vorzugsweise erfolgt die Fixierung mit einer Lichtenergie-Dosis von 5- 10 J/$cm^2$.

Der Vorteil des erfindungsgemäßen holographischen Mediums besteht darin, dass die Photopolymerschicht mit dem einbelichteten Hologramm durch diese Schutzschichtkombination eingekapselt ist, wobei die Komponenten B', C1, C1', C2 und C2' so aufeinander abgestimmt sind, dass sie einerseits eine gute Haftung ermöglichen und gleichzeitig eine Frequenzstabilität/Gitterstabilität des Hologramms und einen Schutz vor chemischer, physikalischer und mechanischer Beanspruchung gewährleisten. Zusätzlich wird durch die Versiegelungsschichten eine Kompatibilität zu weiteren Schichten ermöglicht sowie eine generelle verbesserte Handhabbarkeit des Hologramms, so z. B. ein Schutz gegen Verstauben durch Unterbindung von Restklebrigkeit oder durch eine Antistatik-Ausrüstung der Versiegelungsschicht

zugänglich. Den beiden Schutzschichten C1 und C2 kommen dabei unterschiedliche Aufgaben zu. Die Schutzschicht C1, welche direkt mit der Photopolymerschicht B verbunden ist, ist auf die B'-Schicht von der Substratschicht D1 übertragbar, neutral zum Hologramm, d.h. sie verursacht keine Verschlechterung der Intensität des Hologramms und keine spektrale Verschiebung des Reflexionsmaximums. Ferner haftet die gehärtete Schutzschicht C1' fest an den beiden angrenzenden Schichten, d.h. an der Photopolymerschicht B' und der gehärteten Schutzschicht C2'. Die zweite Schutzschicht C2, welche mit der Schutzschicht C1 verbunden ist, ist so konzipiert, dass sie auf die nicht gehärtete Schicht C1 aufgebracht werden kann, beispielsweise durch Laminierung und im ungehärteten und gehärteten Zustand gut auf der Schutzschicht C1 bzw. C1' haftet. Die gehärtete Schutzschicht C2' weist eine gute Lösemittel- und Kratzbeständigkeit auf. Durch die Kombination der beiden Schutzschichten C1 und C2 wird die das Hologramm enthaltende Photopolymerschicht B' gegen physikalische und chemische Einflüsse, wie Kratz- und Lösemittelschäden geschützt bei gleichzeitiger guter Haftung der Schichten des Aufbaus untereinander und Biegsamkeit sowie Elastizität des versiegelten holographischen Mediums.

Reaktivverdünner im Sinne der Erfindung sind vorzugsweise Verbindungen, die die Anfangsviskosität der härtbaren Zusammensetzung herabsetzen und im Verlauf der Härtung der härtbaren Zusammensetzung mit dem thermoplastischem Harz und Härter eine chemische Bindung eingehen und dabei ein Netzwerk ausbilden.

Unter "funktionell" im Sinne der Erfindung wird in Verbindung mit Acrylaten die Anzahl der jeweils strahlenhärtenden, insbesondere durch UV-VIS Strahlung härtenden, reaktiven Gruppen, bevorzugt in Form von Doppelbindungen, verstanden. Insbesondere sind die strahlungshärtenden Gruppen Acrylatgruppen. Unter einen "multi-funktionellem Acrylat" wird demnach ein Molekül verstanden was zumindest mehr als eine strahlungshärtende Gruppe, insbesondere Acrylatgruppen, aufweist und beispielsweise unter einem "trifunktionellen Acrylat" ein Molekül das drei strahlungshärtende Gruppen, insbesondere Acrylatgruppen, aufweist. Bei den strahlungshärtenden Gruppen handelt es sich insbesondere um radikalisch polymerisierbare Gruppen, wie die Acrylatgruppe.

Unter "flächig vorliegend" im Sinne der Erfindung wird eine Ausgestaltung als ebene Fläche oder auch als konkav oder konvex gewölbte oder wellige Fläche verstanden. Im Sinne der Erfindung muss das das Hologramm enthaltende Photopolymer B' insofern eine ebene, gewölbte oder gewellte Fläche aufweisen, dass eine Auflaminierung der Versiegelungsschicht zumindest im Bereich des Hologramms möglich wird.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyisocyanat" gesprochen wird, ist das Wort "ein" lediglich als unbestimmter Artikel und nicht als Zahlwort aufzufassen, es ist also damit auch eine Ausführungsform umfasst, in der zwei oder mehr Polyisocyanate vorhanden sind die sich beispielsweise strukturell unterscheiden.

In einer weiteren bevorzugten Ausführungsform besteht der erfindungsgemäße Schichtaufbau aus mindestens vier zumindest teilweise miteinander verbunden Schichten, wobei die Schichten in der Reihenfolge Substratschicht A, Photopolymerschicht B', gehärtete Schutzschicht C1' und gehärtete Schutzschicht C2' unmittelbar aufeinander angeordnet sind.

In einer weiteren bevorzugten Ausführungsform besteht der erfindungsgemäße Schichtaufbau aus mindestens vier zumindest teilweise miteinander verbundenen Schichten, wobei die Schichten in der Reihenfolge Photopolymerschicht B', gehärtete Schutzschicht C1', gehärtete Schutzschicht C2' und Substratschicht D2 unmittelbar aufeinander angeordnet sind.

In einer weiteren bevorzugten Ausführungsform besteht der erfindungsgemäße Schichtaufbau aus mindestens fünf zumindest teilweise miteinander verbundenen Schichten, wobei die Schichten in der Reihenfolge Substratschicht A, Photopolymerschicht B', gehärtete Schutzschicht C1', gehärtete Schutzschicht C2' und Substratschicht D2 unmittelbar aufeinander angeordnet sind.

Die Substratschichten A und D2 in den oben genannten Ausführungsformen des erfindungsgemäßen Schichtaufbaus, sind vorzugsweise transparente thermoplastische Folien. Die Substratschicht A kann in einigen Ausführungsformen auch aus einem anderen Trägermaterial wie z.B. Glas oder verschiedenen Kunststoffen sein.

In einer weiteren bevorzugten Ausführungsform weist die Schutzschicht C1 eine Dicke von 1 bis 100 $\mu$m, bevorzugt von 2 bis 50 $\mu$m und ganz besonders bevorzugt von 3 bis 25 $\mu$m auf.

In einer weiteren bevorzugten Ausführungsform weist die Schutzschicht C2 eine Dicke von 1 bis 100 $\mu$m, bevorzugt von 2 bis 50 $\mu$m und ganz besonders bevorzugt von 3 bis 25 $\mu$m auf.

In einer weiteren bevorzugten Ausführungsform enthält die Schutzschicht C1 und / oder die Schutzschicht C2 einen UV-Absorber, vorzugsweise in einer Menge von 0.01 bis 10 Gew.-%, bevorzugter in einer Menge von 0.1 bis 5 Gew.-%, jeweils bezogen auf das Gesamtgewicht der Schutzschicht C1 bzw. C2.

Ebenfalls Gegenstand der Erfindung ist ein Verfahren zur Herstellung des erfindungsgemäßen versiegelten holographischen Mediums nach Anspruch 5.

Das erfindungsgemäße Verfahren hat den Vorteil, dass die Schutzschichten C1 und C2 "trocken" aufgebracht werden, wodurch die Bereitstellung von aufwändigen Maschinen und besonders geschultem Personal, wie beispielsweise zur "nass"-Aufbringung erforderlich, vermieden wird. Aufgrund der sehr guten Haftung der ausgehärteten Schutzschichten untereinander und an der Photopolymerschicht kann nicht nur die ggf. vorhandene Substratschicht D2

rückstandsfrei abgezogen werden, sondern es wird auch eine dauerhafte Beständigkeit gegen gängige organische Lösungsmittel, wässrigen Säuren und Laugen, Kosmetika, Haushalts- und Industriereinigungsmittel und / oder eine ausreichende Kratzbeständigkeit gegen mechanische Einflüsse sichergestellt.

In einer bevorzugten Ausführungsform des erfindungsgemäßen Verfahrens liegt die Photopolymerschicht B' auf einer Substratschicht A oder einen anderen Träger wie z.B. Glas oder Kunststoff vor.

In einer bevorzugten Ausführungsform des erfindungsgemäßen Verfahrens liegt die ungehärtete Schutzschicht C1 auf einer Substratschicht D1 vor und die ungehärtete Schutzschicht C2 auf einer Substratschicht D2 vor.

In einer bevorzugten Ausführungsform des erfindungsgemäßen Verfahrens wird in einem ersten Schritt ein Schichtverbund A-B' bereit gestellt, wobei A eine Substratschicht ist und B' eine Photopolymerschicht, welche ein Volumenhologramm enthält, in einem zweiten Schritt wird die ungehärtete Schutzschicht C1 auf einer Substratschicht D1 aufgebracht, um einen Schichtverbund C1-D1 zu ergeben, in einem dritten Schritt wird der Schichtverbund A-B' mit dem Schichtverbund C1-D1 flächig verbunden um einen Schichtverbund A-B'-C1-D1 zu ergeben, wobei die Schichtverbund A-B' mit dem Schichtverbund C1-D1 vorzugsweise durch Laminierung verbunden wird, in einem vierten Schritt wird die Substratschicht D1 von dem Schichtverbund A-B'-C1-D1 entfernt um einen Schichtverbund A-B'-C1 zu ergeben, in einem fünften Schritt wird die ungehärtete Schutzschicht C2 auf einer Substratschicht D2 aufgebracht, um einen Schichtverbund C2-D2 zu ergeben, in einem sechsten Schritt wird der Schichtverbund A-B'-C1 mit dem Schichtverbund C2-D2 flächig verbunden um einen Schichtverbund A-B'-C1-C2-D2 zu ergeben, wobei die Schichtverbund A-B'-C1 mit dem Schichtverbund C2-D2 vorzugsweise durch Laminierung verbunden wird, in einem siebten Schritt wird der Schichtverbund A-B'-C1-C2-D2 mit aktinischer Strahlung gehärtet, um einen Schichtverbund A-B'-C1'-C2'-D2 zu ergeben.

In einer bevorzugten Ausführungsform des erfindungsgemäßen Verfahrens wird in einem achten Schritt die Substratschicht D2 von dem Schichtverbund A-B'-C1'-C2'-D2 entfernt um einen Schichtverbund A-B'-C1'-C2' zu ergeben.

In einer bevorzugten Ausführungsform des erfindungsgemäßen Verfahren erfolgt eine zumindest teilweise Härtung der Schutzschichten C1 und C2 des Schichtverbundes A-B'-C1-C2-D2 mit aktinischer Strahlung innerhalb von 60 Minuten, vorzugsweise innerhalb von 5 Minuten, besonders bevorzugt innerhalb von weniger als 60 Sekunden.

In einer weiteren bevorzugten Ausführung des erfindungsgemäßen Verfahrens umfasst dieses die folgenden Schritte:

- Herstellen einer lichtempfindlichen holographischen Folie mit dem Schichtaufbau A-B', umfassend:
    - ◦ Vorbereitung eines Beschichtungsmittel für die Herstellung der Photopolymerschicht B;
    - ◦ Beschichtung des Substrates A mit diesem Beschichtungsmittel, sodass der Schichtverbund A-B entsteht;
    - ◦ Einschreiben eines Hologramms in die Photopolymerschicht B, sodass der Schichtverbund A-B* entsteht, wobei B* eine Photopolymerschicht mit einem eingeschriebenen Hologramm ist;
    - ◦ Fixieren des Hologramms in der Photopolymerschicht B* durch flächige breitbandige UV/VIS-Belichtung des ganzen Schichtaufbaus A-B* mit einer Lichtenergie-Dosis von 5-10 $J/cm^2$; sodass der Schichtverbund A-B' entsteht, wobei B' die geblichene, durchpolymerisierte und nicht mehr photoempfindliche Photopolymerschicht B mit einem fixiertem Hologramm ist;
- Herstellen eines Schichtverbunds C1-D1 mit einer ungehärteten Schutzschicht C1, umfassend:
    - ◦ Vorbereitung eines Beschichtungsmittel für die Herstellung der Schicht C1;
    - ◦ Beschichtung des Substrates D1 mit diesem Beschichtungsmittel;
- Herstellen einer holographischen Folie mit dem Schichtaufbau A-B'-C1-D1, umfassend das Aufbringen des Schichtverbundes C1-D1 auf den Schichtverbund A-B' gefolgt von einem flächigen Verbinden der beiden Schichtverbünde miteinander, vorzugsweise durch Laminierung, sodass ein Schichtverbund A-B'-C1-D1 entsteht;
- Entfernen der Substratschicht D1, sodass der Schichtverbund A-B'-C1 entsteht;
- Herstellen eines Schichtverbundes C2-D2 mit einer ungehärteten Schutzschicht C2, umfassend:
    - ◦ Vorbereitung eines Beschichtungsmittel für die Herstellung der Schicht C2;
    - ◦ Beschichtung des Substrates D2 mit diesem Beschichtungsmittel;
- Herstellen einer holographischen Folie mit dem Schichtaufbau A-B'-C1-C2-D2, umfassend das Aufbringen des

Schichtverbundes C2-D2 auf den Schichtverbund A-B'-C1 gefolgt von einem flächigen Verbinden der beiden Schichtverbünde miteinander, vorzugsweise durch Laminierung, sodass ein Schichtverbund A-B'-C1-C2-D2 entsteht;

- Beaufschlagen des Schichtverbunds A-B'-C1-C2-D2 mit aktinischer Strahlung vorzugsweise mit UV/VIS-Strahlung mit einer mit einer Lichtenergie-Dosis von 5-10 J/cm$^2$, sodass der Schichtverbund A-B'-C1'-C2'-D2 entsteht, wobei C1' und C2' die ausgehärteten Schutzschichten C1 und C2 sind;
- Entfernen der Substratschicht D1, sodass der Folienverbund A-B'-C1'-C2' entsteht.

In einer bevorzugten Ausführungsform des erfindungsgemäßen Verfahrens ist der Reaktivverdünner C1-II in der Schutzschicht C1 und der Reaktivverdünner C2-II in der Schutzschicht C2 ein Urethanacrylat erhältlich aus der Umsetzung von Tris(p-isocyanatophenyl)thiophosphat mit alkoholfunktionellen Acrylaten wie Hydroxyethyl(meth)acrylat, Hydroxypropyl(meth)acrylat und / oder Hydroxybutyl(meth)acrylat, vorzugsweise Phosphorothioyltris(oxybenzol-4,1-diylcarbamoyl-oxyethan-2,1-diyl)trisacrylat.

In einer besonders bevorzugten Ausführungsform des erfindungsgemäßen Verfahrens der Reaktivverdünner C1-II in der Schutzschicht C1 und der Reaktivverdünner C2-II in der Schutzschicht C2 vorkonditioniertes und vorgereinigtes Phosphorothioyltris(oxybenzol-4,1-diylcarbamoyloxyethan-2,1-diyl)trisacrylat. Zur Vorkonditionierung und Reinigung wird eine 10 Gew.-%ige Lösung von Phosphorothioyltris(oxybenzol-4,1-diylcarbamoyloxyethan-2,1-diyl)trisacrylat in Ethylacetat und Cyclohexan hergestellt, diese durch eine Schicht Kieselgel 60 (Fa. Merck) filtriert, gefolgt vom Abdestillieren des Cyclohexans und überschüssigem Ethylacetat, bis eine 40%-ige Lösung in Ethylacetat erhalten wird. Der Reinigungsschritt wird solange wiederholt bis die 40%-ige Lösung in Ethylacetat eine HAZEN-Farbzahl (DIN ISO 6271-2:2002) unter 100 aufweist.

Gegenstand der Erfindung ist ebenfalls ein versiegeltes holographisches Medium umfassend einen Schichtaufbau A-B'-C1'-C2', ein versiegeltes holographisches Medium umfassend einen Schichtaufbau B'-C1'-C2', ein versiegeltes holographisches Medium umfassend einen Schichtaufbau B'-C1'-C2'-D2 und ein versiegeltes holographisches Medium umfassend einen Schichtaufbau A-B'-C1'-C2'-D2 erhältlich aus dem oben beschriebenen erfindungsgemäßen Verfahren.

Ebenfalls Gegenstand der Erfindung ist ein Kit-of-parts nach Anspruch 8.

Die ungehärteten Schutzschichten C1 und C2 sind dabei die erfindungsgemäßen ungehärteten Schutzschichten C1 und C2 wie in der Beschreibung definiert.

In einer bevorzugten Ausführungsform des erfindungsgemäßen Kit-of-parts liegt die Photopolymerschicht B' auf einer Substratschicht A vor, wobei die Photopolymerschicht B' auf einer Seite zumindest teilweise mit der Substratschicht A verbunden ist.

In einer bevorzugten Ausführungsform des erfindungsgemäßen Kit-of-parts liegt die ungehärtete Schutzschicht C1 auf einer Substratschicht D1 vor, wobei die Schutzschicht C1 auf einer Seite zumindest teilweise mit der Substratschicht D1 verbunden ist, und die ungehärtete Schutzschicht C2 auf einer Substratschicht D2 vorliegt, wobei die Schutzschicht C2 auf einer Seite zumindest teilweise mit der Substratschicht D2 verbunden ist.

In einer bevorzugten Ausführungsform ist die Substratschicht D1 ein Polyestersubstrat ist, vorzugsweise ein PET-Substrat, noch bevorzugter ein Silikon-modifiziertes PET-Substrat, mit einer Schichtdicke von < 200 µm, bevorzugter < 100 µm und > 20 µm, noch bevorzugter < 45 µm und >20 µm.

In einer bevorzugten Ausführungsform ist die Substratschicht D2 ein Polyestersubstrat ist, vorzugsweise ein PET-Substrat, noch bevorzugter ein Dreischichtkoextrudat- PET-Substrat, mit einer Schichtdicke von < 200 µm, bevorzugter < 100 µm und > 20 µm, noch bevorzugter < 45 µm und >20 µm.

In einer bevorzugten Ausführungsform ist die Substratschicht D1 ein Polyestersubstrat ist, vorzugsweise ein PET-Substrat, noch bevorzugter ein Silikon-modifiziertes PET-Substrat, mit einer Schichtdicke von < 200 µm, bevorzugter < 100 µm und > 20 µm, noch bevorzugter < 45 µm und >20 µm und die Substratschicht D2 ein Polyestersubstrat ist, vorzugsweise ein PET-Substrat, noch bevorzugter ein Dreischichtkoextrudat- PET-Substrat, mit einer Schichtdicke von < 200 µm, bevorzugter < 100 µm und > 20 µm, noch bevorzugter < 45 µm und >20 µm.

In einer bevorzugten Ausführungsform des erfindungsgemäßen Kit-of-parts umfasst die ungehärtete Schutzschicht C1

I) mindestens ein thermoplastisches hauptsächlich lineares und teilkristallines Polyurethan-Harz C1-I,
II) mindestens einen multifunktionellen Acrylat-Reaktivverdünner C1-II ausgewählt aus der Gruppe bestehend aus Phosphorothioyltris(oxybenzol-4,1-diylcarbamoyl-oxyethan-2,1-diyl)trisacrylat, Dipentaerythrit-penta-acrylat und Dipentaerythrit-hexaacrylat,
III) mindestens einen Photoinitiator C1-III, und
IV) ggf. Hilfs- und Zusatzstoffe, und

die ungehärtete Schutzschicht C2

I) mindestens ein thermoplastisches Harz C2-I ausgewählt aus der Gruppe bestehend aus Polyvinylbutyral und Polymethylmethacrylat,

II) mindestens einen multifunktionellen Acrylat-Reaktivverdünner C2-II ausgewählt aus der Gruppe bestehend aus Phosphorothioyltris(oxybenzol-4,1-diylcarbamoyl-oxyethan-2,1-diyl)trisacrylat, Pentaerythrit-triacrylat und 4-fach ethoxyliertes Pentaerythritoltetraacrylat,

III) mindestens einen Photoinitiator C2-III, und

IV) ggf. Hilfs- und Zusatzstoffe.

Substratschicht A

Die Substratschicht A ist vorzugsweise eine thermoplastische Substratschicht/Substratfolie oder ein anderer Träger wie z.B. Glas, Kunststoff, Metall oder Holz. Materialien oder Materialverbünde der thermoplastischen Substratschicht A basieren auf Polycarbonat (PC), Polyethylenterephthalat (PET), amorphem Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratschicht A im spektralen Bereich von 400-800 nm transparent.

Photopolymerschicht B

Die Photopolymerschicht B' wird durch Einschreiben eines Hologramms in die unbelichtete Photopolymerschicht B, gefolgt von optischem Fixieren des Hologramms vorzugsweise durch flächige breitbandige UV/VIS-Belichtung der Photopolymerschicht mit dem eingeschriebenen Hologramm mit einer Lichtenergie-Dosis von 5-10 J/$cm^2$ erzeugt. Bei dem Fixieren werden Reste von Schreibmonomeren, die bei der lokalen Entstehung des Hologramms nicht involviert waren, in der ganzen Photopolymerschicht durchpolymerisiert. Die als Sensibilisatoren dienenden Farbstoffe werden ebenfalls photochemisch zerstört. Die durch Farbstoffe verursachte starke technologische Verfärbung der Photopolymerschicht B verschwindet gänzlich. Die Photopolymerschicht B wird durch die Fixierung geblichen und verwandelt sich in eine nicht mehr photoaktive, farbstofffreie, stabile Photopolymerschicht B' mit einem eingeschriebenen Hologramm.

Vorzugsweise weist die Photopolymerschicht B' vernetzte Matrixpolymere auf, insbesondere dreidimensional vernetzte Matrixpolymere, wobei die Matrixpolymere vorzugsweise Polyurethane sind.

Die Photopolymerschicht B umfasst Matrixpolymere, Schreibmonomere und Photoinitiatoren. Als Matrixpolymere können amorphe Thermoplaste wie z.B. Polyacrylate, Polymethylmethacrylate oder Copolymere von Methylmethacrylat, Methacrylsäure oder andere Alkylacrylate und Alkylmethacrylate sowie Acrylsäure, wie z.B. Polybutylacrylat, weiterhin Polyvinylacetat und Polyvinylburyrat seine partiell hydrolysierten Derivate wie Polyvinylalkohole sowie Copolymerisate mit Ethylen und/oder weiteren (Meth)acrylaten, Gelatine, Celluloseester und Celluloseether wie Methylcellulose, Celluloseacetobutyrat, Silikone, wie z.B. Polydimethylsilicon, Polyurethane, Polybutadiene und Polyisoprene, sowie Polyethylenoxide, Epoxyharze, insbesondere aliphatische Epoxyharze, Polyamide, Polycarbonate sowie die in US 4994347A und darin zitierten Systeme verwendet werden.

Epoxyharze können kationisch mit sich selbst vernetzt werden. Weiterhin können auch Säure/anhydride, Amine, Hydoxyalkylamide sowie Thiole als Vernetzer eingesetzt werden. Silicone können sowohl als Einkomponentensysteme durch Kondensation bei Anwesenheit von Wasser (und ggf. unter Broenstedtsäurenkatalyse) oder als zweikomponentige Systeme durch Zugabe von Kieselsäureester oder zinnorganische Verbindungen vernetzt werden. Ebenso ist die Hydrosilylierungen in Vinyl-Silansystemen möglich.

Ungesättigte Verbindungen, wie z.B. Acryloyl-funktionelle Polymere oder ungesättigte Ester können mit Aminen oder Thiolen vernetzt werden. Eine kationische Vinyletherpolymerisation ist auch möglich.

Insbesondere bevorzugt ist aber, wenn die Matrixpolymere vernetzt, bevorzugt dreidimensional vernetzt und ganz besonders bevorzugt dreidimensional vernetzte Polyurethane sind.

Polyurethan-Matrixpolymere sind insbesondere durch Umsetzung wenigstens einer Polyisocyanat-Komponente a) mit wenigstens einer Isocyanat-reaktiven-Komponente b) erhältlich.

Die Polyisocyanat-Komponente a) umfasst wenigstens eine organische Verbindung mit wenigstens zwei NCO-Gruppen. Bei diesen organischen Verbindungen kann es sich insbesondere um monomere Di- und Triisocyanate, Polyisocyanate und / oder NCO-funktionelle Prepolymere handeln. Die Polyisocyanat-Komponente a) kann auch Mischungen monomerer Di- und Triisocyanate, Polyisocyanate und / oder NCO-funktioneller Prepolymere enthalten oder daraus bestehen.

Als monomere Di- und Triisocyanate können alle dem Fachmann an sich gut bekannten Verbindungen oder

deren Mischungen eingesetzt werden. Diese Verbindungen können aromatische, araliphatische, aliphatische oder cycloaliphatische Strukturen aufweisen. In untergeordneten Mengen können die monomeren Di- und Triisocyanate auch Monoisocyanate, d.h. organische Verbindungen mit einer NCO-Gruppe umfassen.

Beispiele für geeignete monomere Di- und Triisocyanate sind 1,4-Butandiisocyanat, 1,5-Pentandiisocyanat, 1,6-Hexandiisocyanat (Hexamethylendiisocyanat, HDI), 2,2,4-Trimethylhexamethylendiisocyanat und / oder 2,4,4-Trimethylhexamethylendiisocyanat(TMDI), Isophorondiisocyanat (IPDI), 1,8-Diisocyanato-4-(isocyanatomethyl)-octan, Bis-(4,4'-isocyanatocyclohexyl)-methan und / oder Bis-(2,4isocyanatocyclohexyl)methan und /oder deren Mischungen beliebigen Isomerengehalts, 1,4-Cyclohexandiisocyanat, die isomeren Bis-(isocyanatomethyl)cyclohexane, 2,4- und / oder 2,6-Diisocyanato-1-methylcyclohexan, (Hexahydro-2,4- und / oder 2,6-toluylendiisocyanat, H6-TDI), 1,4-Phenylendiisocyanat, 2,4- und / oder 2,6-Toluylendiisocyanat (TDI), 1,5-Naphthylendiisocyanat (NDI), 2,4'-und / oder 4,4'-Diphenylmethandiisocyanat (MDI), 1,3-Bis(isocyanatomethyl)benzol (XDI) und / oder das analoge 1,4-Isomere oder beliebige Mischungen der vorgenannten Verbindungen.

Geeignete Polyisocyanate sind Verbindungen mit Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen, die aus den vorgenannten Di- oder Triisocyanaten erhältlich sind.

Besonders bevorzugt handelt es sich bei den Polyisocyanaten um oligomerisierte aliphatische und / oder cycloaliphatische Di- oder Triisocyanate, wobei insbesondere die oben stehenden aliphatischen und / oder cycloaliphatischen Di- oder Triisocyanate verwendet werden können.

Ganz besonders bevorzugt sind Polyisocyanate mit Isocyanurat-, Uretdion- und / oder Iminooxadiazindion-Strukturen sowie Biurete basierend auf HDI oder deren Mischungen.

Geeignete Prepolymere enthalten Urethan- und / oder Harnstoff-Gruppen sowie gegebenenfalls weitere durch Modifizierung von NCO-Gruppen entstandene Strukturen wie oben genannt. Derartige Prepolymere sind beispielsweise durch Umsetzung der oben genannten monomeren Di- und Triisocyanate und/oder Polyisocyanaten a1) mit isocyanatreaktiven Verbindungen b1) erhältlich.

Als isocyanatreaktive Verbindungen b1) können Alkohole, Amino oder Mercapto-Verbindungen, bevorzugt Alkohole, verwendet werden. Dabei kann es sich insbesondere um Polyole handeln. Ganz besonders bevorzugt können als isocyanatreaktive Verbindung b1) Polyester-, Polyether-, Polycarbonat-, Poly(meth)acrylat- und/oder Polyurethan-Polyole verwendet werden.

Als Polyesterpolyole sind beispielsweise lineare Polyesterdiole oder verzweigte Polyesterpolyole geeignet, die in bekannter Weise durch Umsetzung von aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden können. Beispiele für geeignete Di- bzw. Polycarbonsäuren sind mehrwertige Carbonsäuren wie Bernstein-, Adipin-, Kork-, Sebacin-, Decandicarbon-, Phthal-, Terephthal-, Isophthal- Tetrahydrophthal- oder Trimellithsäure sowie Säureanhydride wie Phthal-, Trimellith- oder Bernsteinsäureanhydrid oder deren beliebige Gemische untereinander. Die Polyesterpolyole können auch auf natürlichen Rohstoffen wie Rizinusöl basieren. Es ist ebenfalls möglich, dass die Polyesterpolyole auf Homo- oder Mischpolymerisaten von Lactonen basieren, die bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2 beispielsweise der nachstehend genannten Art erhalten werden können.

Beispiele für geeignete Alkohole sind alle mehrwertigen Alkohole wie z.B. die $C_2$ - $C_{12}$-Diole, die isomeren Cyclohexandiole, Glycerin oder deren beliebige Gemische untereinander.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkohole einer OH-Funktionalität ≥ 2, bevorzugt Butandiol-1,4, Hexandiol-1,6 und / oder 3-Methylpentandiol. Auch Polyesterpolyole können zu Polycarbonatpolyolen umgearbeitet werden.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden. Besonders bevorzugt sind Propylenoxid-homopolymere sowie statistische oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten $C_3$- und $C_4$-Isomere.

Daneben sind als Bestandteile der Polyol-Komponente b1) als polyfunktionelle, isocyanatreaktive Verbindungen auch niedermolekulare, d.h. mit Molekulargewichten ≤ 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Dies können beispielsweise in Ergänzung zu den oben genannten Verbindungen Neopentylglykol, 2-Ethyl-2-butylpropandiol, Trimethylpentandiol, stellungs-isomere Diethyloctandiole, Cyclohexandiol, 1,4-Cyclohexandimethanol, 1,6-Hexandiol, 1,2- und 1,4-Cyclohexandiol, hydriertes Bisphenol A, 2,2-Bis(4-hydroxy-cyclohexyl)-propan oder 2,2-Dimethyl-3-hydroxypropionsäure, 2,2-dimethyl-3-hydroxypropyl-ester sein. Beispiele geeigneter Triole sind Trimethylolethan, Trimethylolpropan oder Glycerin. Geeignete höherfunktionelle Alkohole sind Di-(trimethylolpropan), Pentaerythrit, Dipenta-erythrit oder Sorbit.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Es ist ebenfalls möglich, als isocyanatreaktive Verbindungen b1) Amine einzusetzen. Beispiele geeigneter Amine sind Ethylendiamin, Propylendiamin, Diaminocyclohexan, 4,4'-Dicylohexylmethandiamin, Isophorondiamin (IPDA), difunktionelle Polyamine wie z.B. die Jeffamine®, aminterminierte Polymere, insbesondere mit zahlenmittleren Molmassen ≤ 10.000 g/Mol. Mischungen der vorgenannten Amine können ebenfalls verwendet werden.

Es ist ebenfalls möglich, als isocyanatreaktive Verbindungen b1) Aminoalkohole einzusetzen. Beispiele geeigneter Aminoalkohole sind die isomeren Aminoethanole, die isomere Aminopropanole die isomeren Aminobutanole und die isomeren Aminohexanole oder deren beliebige Mischungen.

Alle vorgenannten isocyanatreaktiven Verbindungen b1) können untereinander beliebig vermischt werden.

Bevorzugt ist auch, wenn die isocyanatreaktiven Verbindungen b1) eine zahlenmittlere Molmasse von ≥ 200 und ≤ 10.000 g/Mol, weiter bevorzugt ≥ 500 und ≤ 8.000 g/Mol und ganz besonders bevorzugt ≥ 800 und ≤ 5.000 g/Mol aufweisen. Die OH-Funktionalität der Polyole beträgt bevorzugt 1.5 bis 6.0, besonders bevorzugt 1.8 bis 4.0.

Die Prepolymere der Polyisocyanat-Komponente a) können insbesondere einen Restgehalt an freiem monomeren Di- und Triisocyanaten < 1 Gew.-%, besonders bevorzugt < 0.5 Gew.-% und ganz besonders bevorzugt < 0.3 Gew.-% aufweisen.

Es ist gegebenenfalls auch möglich, dass die Polyisocyanat-Komponente a) vollständig oder anteilsmäßig organische Verbindung enthält, deren NCO-Gruppen ganz oder teilweise mit aus der Beschichtungstechnologie bekannten Blockierungsmitteln umgesetzt sind. Beispiel für Blockierungsmittel sind Alkohole, Lactame, Oxime, Malonester, Pyrazole sowie Amine, wie z.B. Butanonoxim, Diisopropylamin, Malonsäurediethylester, Acetessigester, 3,5-Dimethylpyrazol, ε-Caprolactam, oder deren Mischungen.

Besonders bevorzugt ist, wenn die Polyisocyanat-Komponente a) Verbindungen mit aliphatisch gebundenen NCO-Gruppen umfasst, wobei unter aliphatisch gebundenen NCO-Gruppen derartige Gruppen verstanden werden, die an ein primäres C-Atom gebunden sind. Die isocyanatreaktive Komponente b) umfasst bevorzugt wenigstens eine organische Verbindung, die im Mittel wenigstens 1.5 und bevorzugt 2 bis 3 isocyanatreaktive Gruppen aufweist. Im Rahmen der vorliegenden Erfindung werden als isocyanatreaktive Gruppen bevorzugt Hydroxy-, Amino- oder Mercapto-Gruppen angesehen.

Die isocyanatreaktive Komponente kann insbesondere Verbindungen umfassen, die im Zahlenmittel wenigstens 1.5 und bevorzugt 2 bis 3 isocyanatreaktive Gruppen aufweisen.

Geeignete polyfunktionelle, isocyanatreaktive Verbindungen der Komponente b) sind beispielsweise die oben beschriebenen Verbindungen b1).

Erfindungsgemäß geeignete Photoinitiatoren sind üblicherweise durch aktinische Strahlung aktivierbare Verbindungen, die eine Polymerisation der Schreibmonomere auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden.

Typ I-Photoinitiatoren (Norrish-Typ-I) für die radikalische Photopolymerisation bilden beim Bestrahlen durch eine unimolekulare Bindungsspaltung freie Radikale. Beispiele für Typ I-Photoinitiatoren sind Triazine, Oxime, Benzoinether, Benzilketale, Bis-imidazole, Aroylphosphinoxide, Sulfonium- und Iodoniumsalze.

Typ II-Photoinitiatoren (Norrish-Typ-II) für die radikalische Polymerisation bestehen aus einem Farbstoff als Sensibilisator und einem Coinitiator und durchlaufen bei der Bestrahlung mit auf den Farbstoff angepasstem Licht eine bimolekulare Reaktion. Zunächst absorbiert der Farbstoff ein Photon und überträgt aus einem angeregten Zustand Energie auf den Coinitiator. Dieser setzt durch Elektronen- oder Protonentransfer oder direkte Wasserstoffabstraktion die polymerisationsauslösenden Radikale frei.

Im Sinne dieser Erfindung werden bevorzugt Typ II-Photoinitiatoren verwendet.

Farbstoff und Coinitiator der Typ II-Photoinitiatoren können entweder unmittelbar gemeinsam mit den weiteren Komponenten des Photopolymers vermischt werden oder aber auch jeweils mit Einzelkomponenten vorvermischt werden. Insbesondere wenn das Photopolymer Polyurethan-Matrixpolymere enthalten soll, kann der Farbstoff mit der Isocyanat-reaktiven Komponente und der Coinitiator mit der Isocyanat-Komponente vorvermischt werden. Ebenso ist es

aber auch möglich den Coinitiator mit der Isocyanat-reaktiven Komponente und den Farbstoff mit der Isocyanat-Komponente vorzumischen.

Solche Photoinitiatorsysteme sind prinzipiell in der EP 0 223 587 A beschriebenen und bestehen bevorzugt aus einer Mischung von einem oder mehreren Farbstoffen mit Ammoniumalkylarylborat(en).

Geeignete Farbstoffe, die zusammen mit einem Ammoniumalkylarylborat einen Typ II-Photoinitiator bilden, sind die in der WO 2012062655 beschriebenen kationischen Farbstoffe in Kombination mit den eben dort beschriebenen Anionen.

Geeignete Ammoniumalkylarylborate sind beispielsweise (Cunningham et al., RadTech'98 North America UV/EB Conference Proceedings, Chicago, Apr. 19-22, 1998): Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat hexylborat ([191726-69-9], CGI 7460, Produkt der BASF SE, Basel, Schweiz), 1-Methyl-3-octylimidazolium Dipentyldiphenylborat und Tetrabutylammonium Tris-(3-chlor-4-methylphenyl)-hexylborat ([1147315-11-4], CGI 909, Produkt der BASF SE, Basel, Schweiz).

Es kann vorteilhaft sein, Gemische dieser Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserlichtfarben blau, grün und rot jeweils einen geeigneten Photoinitiator enthält.

Bei einer weiteren bevorzugten Ausführungsform ist vorgesehen, dass die Schreibmonomere ein mono- und / oder ein multifunktionelles (Meth)acrylat-Schreibmonomere umfassen. Ganz besonders bevorzugt können die Schreibmonomere zusätzlich wenigstens ein mono- und / oder ein multifunktionelles Urethan(meth)acrylat umfassen.

Geeignete Acrylat-Schreibmonomere sind insbesondere Verbindungen der allgemeinen Formel (I)

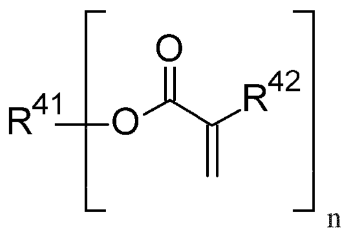

(I)

bei denen n≥1 und n≤4 ist und $R^{41}$ ein linearer, verzweigter, cyclischer oder heterocyclischer unsubstituierter oder gegebenenfalls auch mit Heteroatomen substituierter organischer Rest und/oder $R^{42}$ Wasserstoff, ein linearer, verzweigter, cyclischer oder heterocyclischer unsubstituierter oder gegebenenfalls auch mit Heteroatomen substituierter organischer Rest ist. Besonders bevorzugt ist $R^{42}$ Wasserstoff oder Methyl und/oder $R^{41}$ ein linearer, verzweigter, cyclischer oder heterocyclischer unsubstituierter oder gegebenenfalls auch mit Heteroatomen substituierter organischer Rest.

Als Acrylate bzw. Methacrylate werden vorliegend Ester der Acrylsäure bzw. Methacrylsäure bezeichnet. Beispiele bevorzugt verwendbarer Acrylate und Methacrylate sind Phenylacrylat, Phenylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Bisphenol A Diacrylat, Bisphenol A Dimethacrylat, sowie deren ethoxylierte Analogverbindungen, N-Carbazolylacrylate.

Als Urethanacrylate werden vorliegend Verbindungen mit mindestens einer Acrylsäureestergruppe und mindestens eine Urethanbindung verstanden. Solche Verbindungen können beispielsweise durch Umsetzung eines Hydroxy-funktionellen Acrylats oder Methacrylats mit einer Isocyanat-funktionellen Verbindung erhalten werden.

Beispiele hierfür verwendbarer Isocyanat-funktionelle Verbindungen sind Monoisocyanate sowie die unter a) genannten monomeren Diisocyanate, Triisocyanate und / oder Polyisocyanate. Beispiele geeigneter Monoisocyanate sind Phenylisocyanat, die isomeren Methylthiophenylisocyanate. Di-, Tri- oder Polyisocyanate sind oben genannt sowie

Triphenylmethan-4,4',4"-triisocyanat und Tris-(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische Di-, Tri- oder Polyisocyanate.

Als hydroxyfunktionelle Acrylate oder Methacrylate für die Herstellung von Urethanacrylaten kommen beispielsweise Verbindungen wie 2-Hydroxyethyl(meth)acrylat, Polyethylenoxid-mono-(meth)acrylate, Polypropylenoxidmono(meth)acrylate, Polyalkylenoxidmono(meth)-acrylate, Poly-($\varepsilon$-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly($\varepsilon$-caprolacton)mono-(meth)acrylat.

Ebenfalls verwendet werden können die an sich bekannten hydroxylgruppenhaltigen Epoxy(meth)-acrylate mit OH-Gehalten von 20 bis 300 mg KOH/g oder hydroxylgruppenhaltige Polyurethan-(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl) thiophosphat und / oder m-Methylthiophenylisocyanat mit alkoholfunktionellen Acrylaten wie Hydroxyethyl(meth)acrylat, Hydroxypropyl(meth)acrylat und / oder Hydroxybutyl(meth)-acrylat.

Ebenso ist es möglich, dass das Schreibmonomer weitere ungesättigte Verbindungen wie $\alpha,\beta$-ungesättigte Carbonsäurederivate wie beispielsweise Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, $\alpha$-Methylstyrol, Vinyltoluol und / oder Olefine, umfasst.

Gemäß einer weiteren bevorzugten Ausführungsform ist vorgesehen, dass die Photopolymer-Formulierung zusätzlich monomere Urethane als Additive enthält, wobei die Urethane insbesondere mit wenigstens einem Fluoratom substituiert sein können.

Bevorzugt können die Urethane die allgemeine Formel (II)

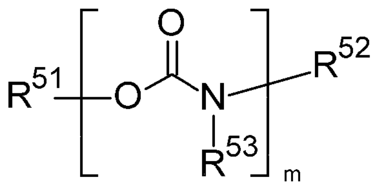

(II)

haben, in der m≥1 und m≤8 ist und $R^{51}$, $R^{52}$ und $R^{53}$ lineare, verzweigte, cyclische oder heterocyclische unsubstituierte oder gegebenenfalls auch mit Heteroatomen substituierte organische Reste und/oder $R^{52}$, $R^{53}$ unabhängig voneinander Wasserstoff sind, wobei bevorzugt mindestens einer der Reste $R^{51}$, $R^{52}$, $R^{53}$ mit wenigstens einem Fluoratom substituiert ist und besonders bevorzugt $R^{51}$ ein organischer Rest mit mindestens einem Fluoratom ist. Besonders bevorzugt ist $R^{52}$ ein linearer, verzweigter, cyclischer oder heterocyclischer unsubstituierter oder gegebenenfalls auch mit Heteroatomen wie beispielsweise Fluor substituierter organischer Rest.

Gemäß einer weiteren bevorzugten Ausführungsform der Erfindung ist vorgesehen, dass das Photopolymer 10 bis 89.999 Gew.-%, bevorzugt 20 bis 70 Gew.-% Matrixpolymere, 3 bis 60 Gew.-%, bevorzugt 10 bis 50 Gew.-% Schreibmonomere, 0.001 bis 5 Gew.-%, bevorzugt 0.5 bis 3 Gew.-% Photoinitiatoren und gegebenenfalls 0 bis 4 Gew.-%, bevorzugt 0 bis 2 Gew.-% Katalysatoren, 0 bis 5 Gew.-% , bevorzugt 0.001 bis 1 Gew.-% Stabilisatoren, 0 bis 40 Gew.-%, bevorzugt 10 bis 30 Gew.-% monomere Fluorurethane und 0 bis 5 Gew.-%, bevorzugt 0.1 bis 5 Gew.-% weitere Additive enthält, wobei die Summe aller Bestandteile 100 Gew.-% beträgt.

Besonders bevorzugt werden Photopolymer mit 20 bis 70 Gew.-% Matrixpolymeren, 20 bis 50 Gew.-% Schreibmonomere, 0.001 bis 5 Gew.-% Photoinitiatoren, 0 bis 2 Gew.-% Katalysatoren, 0.001 bis 1 Gew.-% Radikalstabilisatoren gegebenenfalls 10 bis 30 Gew.-% Fluorurethane und gegebenenfalls 0.1 bis 5 Gew.-% weiterer Additive eingesetzt.

Als Katalysatoren können Urethanisierungskatalysatoren, wie z.B. organische oder anorganischen Derivate des Bimuths, des Zinns, des Zinks oder des Eisens (siehe dazu auch die in der US 2012/062658 genannten Verbindungen) verwendet werden. Besonders bevorzugte Katalysatoren sind Butylzinn-tris(2-ethylhexanoat), Eisen(III) -tris-acetylacetonat, Bismuth(III)tris(2-ethylhexanoat), und Zinn(II) bis(2-ethylhexanoat). Weiterhin können auch sterisch gehinderte Amine als Katalysatoren eingesetzt werden.

Als Stabilisatoren können Radikalinhibitoren wie HALS-Amine, N-Alkyl-HALS, N-Alkoxy-HALS- und N-Alkoxyethyl-HALS-Verbindungen sowie Antioxidantien und / oder UV Absorber zum Einsatz kommen.

Als weitere Additive können Verlaufshilfsmittel und / oder Antistatika und / oder Thixotropiermittel und / oder Verdicker und / oder Biozide eingesetzt werden.

Schutzschicht C1

Die Schutzschicht C1 umfasst vor der Härtung mit aktinischer Strahlung mindestens ein physikalisch trocknendes polymeres Harz C1-I, mindestens einen multifunktionellen Acrylat-Reaktivverdünner (RV) C1-II und mindestens einen Photoinitiator C1-III. Bevorzugt weist die Schutzschicht C1 zusätzlich einen UV Absorber in einer Menge von 0.1 bis 10 Gew. % auf.

Die physikalisch trocknenden Harze für die Schutzschicht C1 sind thermoplastische hauptsächlich linearen teilkristallinen Polyurethane (s. z.B. Günter Oertel (Hrsg.): Kunststoff-Handbuch - Bd. 7 Polyurethane. 3. Auflage. Carl Hanser Verlag, 1993). Bevorzugt sind die Polyurethane der Marken Desmocoll® und Desmomelt® von Fa. Covestro Deutschland AG, speziell entwickelt als thermoaktivierende Klebstoffe. Weitere Beispiele für geeignete thermoplastische hauptsächlich lineare teilkristalline Polyurethane für die Schutzschicht C1 sind in der DE 3729068 A1, DE 3702394 A1 und US 20050112971 A1 beschrieben, auf deren diesbezügliche Offenbarung hiermit Bezug genommen wird.

Der acrylfunktionelle Reaktivverdünner ist aus der Klasse von multifunktionellen (bevorzugt mindestens trifunktionellen) Acrylaten. Bevorzugt dabei sind entweder ein Triacrylat aus Desmodur® RFE von Fa. Covestro AG und Hydroxyethylacrylat und/oder das Dipentaerythrit-penta-acrylat und/oder das Dipentaerythrit-hexaacrylat. Besonderes bevorzugt weisen die acrylfunktionellen Reaktivverdünner als 40 %ige Lösung in Ethylacetat eine Farbzahl von < 200 Hazen, besonders bevorzugt von < 100 Hazen auf (DIN ISO 6271-2:2002). Besonders bevorzugt ist vorkonditioniertes und vorgereinigtes Phosphorothioyltris(oxybenzol-4,1-diylcarbamoyloxyethan-2,1-diyl)tris-acrylat. Das Phosphorothioyltris(oxybenzol-4,1-diylcarbamoyloxyethan-2,1-diyl)trisacrylat wie unten beschrieben gereinigt und vorkonditioniert werden.

Die eingesetzten Photoinitiatoren sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden die eine radikalische Polymerisation auslösen, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyldiphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II Photoinitiatoren eingesetzt, für den längerwelligen sichtbaren Lichtbereich kommen überwiegend Typ-II- Photoinitiatoren zum Einsatz.

Bevorzugt werden 1-hydroxy-cyclohexyl-phenyl-keton (z.B. Irgacure® 184 der BASF SE), 2-hydroxy-2-methyl-1-phenyl-1-propanon (z.B. Irgacure® 1173 der BASF SE), 2-hydroxy-1-{4-[4-(2-hydroxy-2-methyl-propionyl)-benzyl]-phenyl}-2-methylpropan-1-on (z.B. Irgacure® 127 der BASF SE), 2-hydroxy-1-[4-(2-hydroxyethoxy)phenyl]-2-methyl-1-propanon (z.B. Irgacure® 2959 der BASF SE); 2,4,6-trimethylbenzoyl-diphenylphosphine oxide (z.B. Lucirin® TPO der BASF SE); 2,4,6-trimethylbenzoyl-diphenyl phosphinat (z.B. Lucirin® TPO-L der BASF SE), bis(2,4,6-trimethylbenzoyl)-phenylphosphineoxid (Lucirin® 819); [1-(4-phenylsulfanylbenzoyl)heptyliden-amino]benzoat (z.B. Irgacure® OXE 01 der BASF SE); [1-[9-ethyl-6-(2-methylbenzoyl)carbazol-3-yl]ethylidenamino] acetat (z.B. Irgacure® OXE 02 der BASF SE) sowie deren Mischungen. Besonders bevorzugt sind 2-hydroxy-2-methyl-1-phenyl-1-propanon und 2,4,6-trimethylbenzoyldiphenylphosphin oxide sowie deren Mischungen.

Typische UV Absorber sind Benzotriazole, Cyanoacrylate, Benzophenone, Phenyltriazine, Hydroxyphenyltrazine oder Oxalanilide.

Weiterhin können enthalten sein Lichtschutzmittel wie Phenole oder HALS Amine.

In einer bevorzugen Ausführungsform umfasst die ungehärtete Schutzschicht C1

I) mindestens ein thermoplastisches hauptsächlich lineares und teilkristallines Polyurethan-Harz C1-I,
II) mindestens einen multifunktionellen Acrylat-Reaktivverdünner C1-II ausgewählt aus der Gruppe bestehend aus Phosphorothioyltris(oxybenzol-4,1-diylcarbamoyl-oxyethan-2,1-diyl)trisacrylat, Dipentaerythrit-penta-acrylat und Dipentaerythrit-hexaacrylat,
III) mindestens einen Photoinitiator C1-III, und
IV) ggf. Hilfs- und Zusatzstoffe.

Substratschicht D1

Die Substratschicht D1 ist vorzugsweise eine thermoplastische Substratschicht/Substratfolie. Materialien oder Materialverbünde der thermoplastischen Substratschicht/Substratfolie D1 basieren auf Polycarbonat(PC), Polyethylenterephthalat (PET), amorphe Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratfolie D1 im spektralen Bereich von 400-800 nm transparent.

Als Substratschicht D1 sind ganz besonders die mechanisch stabilen thermoplastischen Kunststoffsubstrate aus Polyester geeignet, insbesondere solche, wie z.B. Polyethylenterephtalat (PET) mit einer Schichtdicke von $< 200\ \mu m$, bevorzugter $< 100\ \mu m$ und $> 20\ \mu m$, noch bevorzugter $< 45\ \mu m$ und $>20\ \mu m$, die durch Oberflächenmodifikation in ihren Adhäsionseigenschaften reduziert wurden. Hierfür kommen verschiedene Techniken in Betracht. So können anorganische Gleitadditive zugesetzt werden, wie z.B. Kaolin, Ton, Bleicherde, Calciumcarbonat, Siliziumdioxid, Aluminiumoxid, Titanoxid, Calciumphosphat.

Um die optischen Eigenschaften solcher Folien zu verbessern werden auch Dreischichtkoextrudatfilme verwendet, bei denen nur die äußeren Schichten derartige anorganische Gleitadditive enthalten (z.B. Hostaphan RNK). Weiterhin können auch Silikone auf die Oberflächen aufgebracht werden (z.B. Hostaphan RN30 2PRK), die die Oberflächenspannung und damit die Hafteigenschaften reduzieren.

Besonders bevorzugt sind Silikon-modifizierte PET-Folien (wie z.B. Hostaphan RN30 2PRK). Die Verwendung dieser Folien erleichtert das Entfernen der Schicht D1 bevor die Schicht C1 schon ausgehärtet ist.

Schutzschicht C2

Die Schutzschicht C2 umfasst vor der Härtung mit aktinischer Strahlung mindestens ein physikalisch trocknendes polymeres Harz C2-I, mindestens einen multifunktionellen Acrylat-Reaktivverdünner (RV) C2-II und mindestens einen Photoinitiator C2-III. Bevorzugt weist die Schutzschicht C2 zusätzlich einen UV Absorber in einer Menge von 0.1 bis 10 Gew. % auf.

Die physikalisch trocknenden Harze für die Schutzschicht C2 sind vorzugsweise Polyvinylbutyral mit $M_w \geq$ 100.000 g/mol oder amorphes Polymethylmethacrylat mit $M_w \geq$ 100.000 g/mol.

Der acrylfunktionelle Reaktivverdünner ist mindestens ein multifunktionelles Acrylat, bevorzugt ein mindestens trifunktionelles Acrylaten. Besonders bevorzugt dabei sind entweder ein Triacrylat aus Desmodur® RFE von Fa. Covestro AG und Hydroxyethylacrylat (Phosphorothioyltris(oxybenzol-4,1-diylcarbamoyloxyethan-2,1-diyl)trisacrylat) und/oder Pentaerythrit-triacrylat und/oder 4-fach ethoxyliertes Pentaerythritoltetraacrylat, besonders bevorzugt ist Phosphorothioyltris(oxybenzol-4,1-diylcarbamoyloxyethan-2,1-diyl)trisacrylat.

Die eingesetzten Photoinitiatoren sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden die eine radikalische Polymerisation auslösen, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyldiphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II Photoinitiatoren eingesetzt, für den längerwelligen sichtbaren Lichtbereich kommen überwiegend Typ-II- Photoinitiatoren zum Einsatz.

Bevorzugt werden 1-hydroxy-cyclohexyl-phenyl-keton (z.B. Irgacure® 184 der BASF SE), 2-hydroxy-2-methyl-1-phenyl-1-propanon (z.B. Irgacure® 1173 der BASF SE), 2-hydroxy-1-{4-[4-(2-hydroxy-2-methyl-propionyl)-benzyl]-phenyl}-2-methylpropan-1-on (z.B. Irgacure® 127 der BASF SE), 2-hydroxy-1-[4-(2-hydroxyethoxy)phenyl]-2-methyl-1-propanon (z.B. Irgacure® 2959 der BASF SE); 2,4,6-trimethylbenzoyl-diphenylphosphine oxide (z.B. Lucirin® TPO der BASF SE); 2,4,6-trimethylbenzoyl-diphenyl phosphinat (z.B. Lucirin® TPO-L der BASF SE), bis(2,4,6-trimethylbenzoyl)-phenylphosphineoxid (Lucirin® 819); [1-(4-phenylsulfanylbenzoyl)heptyliden-amino]benzoat (z.B. Irgacure® OXE 01 der BASF SE); [1-[9-ethyl-6-(2-methylbenzoyl)carbazol-3-yl]ethylidenamino] acetat (z.B. Irgacure® OXE 02 der BASF SE) sowie deren Mischungen. Besonders bevorzugt sind 2-hydroxy-2-methyl-1-phenyl-1-propanon und 2,4,6-trimethylbenzoyldiphenylphosphin oxid sowie deren Mischungen.

Typische UV Absorber sind Benzotriazole, Cyanoacrylate, Benzophenone, Phenyltriazine, Hydroxyphenyltrazine oder Oxalanilide.

Weiterhin können enthalten sein Lichtschutzmittel wie Phenole oder HALS Amine.

In einer bevorzugen Ausführungsform umfasst die ungehärtete Schutzschicht C2

I) mindestens ein thermoplastisches Harz C2 ausgewählt aus der Gruppe bestehend aus Polyvinylbutyral mit $M_w \geq$ 100.000 g/mol oder amorphem Polymethylmethacrylat mit $M_w \geq$ 100.000 g/mol,
II) mindestens einen multifunktionellen Acrylat-Reaktivverdünner C2-II ausgewählt aus der Gruppe bestehend aus Phosphorothioyltris(oxybenzol-4,1-diylcarbamoyl-oxyethan-2,1-diyl)trisacrylat, Pentaerythrit-triacrylat und 4-fach ethoxyliertes Pentaerythritoltetraacrylat,
III) mindestens einen Photoinitiator C2-III**,** und
IV) ggf. Hilfs- und Zusatzstoffe.

<u>Substratschicht D2</u>

Die Substratschicht D2 ist vorzugsweise eine thermoplastische Substratschicht/Substratfolie. Materialien oder Materialverbünde der thermoplastischen Substratschicht/Substratfolie D2 basieren auf Polycarbonat(PC), Polyethylenterephthalat (PET), amorphe Polyester, Polybutylenterephthalat, Polyethylen, Polypropylen, Celluloseacetat, Cellulosehydrat, Cellulosenitrat, Cycloolefinpolymere, Polystyrol, hydriertem Polystyrol, Polyepoxide, Polysulfon, thermoplastisches Polyurethan (TPU), Cellulosetriacetat (CTA), Polyamid (PA), Polymethylmethacrylat (PMMA), Polyvinylchlorid, Polyvinylacetat, Polyvinylbutyral oder Polydicyclopentadien oder deren Mischungen. Besonders bevorzugt basieren sie auf PC, PET, PA, PMMA und CTA. Materialverbünde können Folienlaminate oder Coextrudate sein. Bevorzugte Materialverbünde sind Duplex- und Triplexfolien aufgebaut nach einem der Schemata A/B, A/B/A oder A/B/C. Besonders bevorzugt sind PC/PMMA, PC/PA, PC/PET, PET/PC/PET und PC/TPU. Vorzugsweise ist Substratfolie D1 im spektralen Bereich von 400-800 nm transparent.

Als Substratschicht D2 sind ganz besonders die mechanisch stabilen thermoplastischen Kunststoffsubstrate aus Polyester geeignet, insbesondere solche, wie z.B. Polyethylenterephtalat (PET) mit einer Schichtdicke von < 200 μm, bevorzugt < 100 μm und > 20 μm, noch bevorzugter < 45 μm und >20 μm, die durch Oberflächenmodifikation in ihren Adhäsionseigenschaften reduziert wurden. Hierfür kommen verschiedene Techniken in Betracht. So können anorganische Gleitadditive zugesetzt werden, wie z.B. Kaolin, Ton, Bleicherde, Calciumcarbonat, Siliziumdioxid, Aluminiumoxid, Titanoxid, Calciumphosphat.

Um die optischen Eigenschaften solcher Folien zu verbessern werden auch Dreischichtkoextrudatfilme verwendet, bei denen nur die äußeren Schichten derartige anorganische Gleitadditive enthalten (z.B. Hostaphan RNK). Weiterhin können auch Silikone auf die Oberflächen aufgebracht werden (z.B. Hostaphan RN30 2PRK), die die Oberflächenspannung und damit die Hafteigenschaften reduzieren.

Besonders bevorzugt dabei sind die Dreischichtkoextrudat-PET-Folien (wie z.B. Hostaphan RNK).

Ebenfalls Gegenstand der Erfindung ist die Verwendung des erfindungsgemäßen Schichtaufbauten und des erfindungsgemäßen Kit-of-parts für das erfindungsgemäße Verfahren.

In einer Ausführungsform enthält das erfindungsgemäße versiegelte holographische Medium eine Hologramm enthaltende Photopolymerschicht mit einer Schichtdicke von 0.3 μm bis 500 μm, bevorzugt von 0.5 μm bis 200 μm und besonders bevorzugt von 1 μm bis 100 μm.

Insbesondere kann das Hologramm ein Reflektions-, Transmissions-, In-Line-, Off-Axis-, Full-Aperture Transfer-, Weißlicht-Transmissions-, Denisyuk-, Off-Axis Reflektions- oder Edge-Lit Hologramm sowie ein holographisches Stereogramm und bevorzugt ein Reflektions-, Transmissions- oder Edge-Lit Hologramm sein. Bevorzugt sind Reflektionshologramme, Denisyukhologramme, Transmissionshologramme.

In der Photopolymerschicht können ein oder mehrere Hologramme an derselben Stelle oder nebeneinander einbelichtet werden/sein. Belichtet man an derselben Stelle ein, so können unterschiedliche Bildinhalte einbelichtet werden. Ebenfalls können auch verschiedene Ansichten eines Objektes mit leicht variierenden Rekonstruktionswinkeln einbelichtet werden, so dass Stereogramme entstehen. Ebenfalls ist es möglich versteckte Hologramme und Mikrotexte einzubelichten. Gleichermaßen ist es im Falle von Transmissionshologrammen möglich mehrere lichtleitende Funktionen und/ oder lichtleitende Funktionen für verschiedene spektrale Bereiche einzubelichten. Mögliche optische Funktionen der Hologramme entsprechen den optischen Funktionen von Lichtelementen wie Linsen, Spiegel, Umlenkspiegel, Filter, Streuscheiben, gerichteten Streuelemente, Beugungselemente, Lichtleiter, Lichtlenker (waveguides), Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. So kann man beispielweise mit derartigen Aufbauten autostereoskopische oder holographische elektronische Displays bauen, die es erlauben einen stereoskopischen visuellen Eindruck ohne weitere Hilfsmittel wie z.B. einer Polarisator- oder Shutterbrille zu erleben, der Verwendung in automobilen Head-up Displays oder Head-mounted Displays.

Häufig zeigen diese optischen Elemente eine spezifische Frequenzselektivität, je nachdem wie die Hologramme belichtet wurden und welche Dimensionen das Hologramm hat. Dies ist insbesondere wichtig, wenn man monochromatische Lichtquellen wie LED oder Laserlicht verwendet. So benötigt man ein Hologramm pro Komplementärfarbe (RGB), um Licht frequenzselektiv zu lenken und gleichzeitig vollfarbige Displays zu ermöglichen. Daher sind in bestimmten Displayaufbauten mehrere Hologramme ineinander im Medium zu belichten.

Zudem können mittels der erfindungsgemäßen versiegelten holographischen Medien auch holographische Bilder oder Darstellungen, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, I1-lustrationen, Sammelkarten, Bilder und dergleichen sowie Bilder, die digitale Daten repräsentieren können u.a. auch in Kombination mit den zuvor dargestellten Produkten hergestellt werden. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung dar. Auch ist es möglich derartige Hologramme zur Speicherung digitaler Daten zu verwenden, wobei verschiedenste Belichtungsverfahren (Shift-, Spatial- oder Angular- Multiplexing) verwendet werden.

Ebenfalls Gegenstand der Erfindung ist eine optische Anzeige, umfassend ein erfindungsgemäßes versiegeltes holographisches Medium.

Beispiele für derartige optische Anzeigen sind bildgebende Anzeigen auf Basis von Flüssigkristallen, organischen lichtemittierenden Dioden (OLED), LED-Displaytafeln, Microelektromechanische Systeme (MEMS) auf Basis von diffraktiver Lichtselektion, Electrowettingdisplays (E-ink) und Plasmabildschirmen. Derartige optische Anzeigen können autostereoskopische und/oder holographische Displays, transmittive und reflektive Projektionsleinwände oder Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln sein.

Ebenfalls Gegenstand der Erfindung sind autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln umfassend ein erfindungsgemäßes holographisches Medium.

Noch weitere Gegenstände der Erfindung sind ein Sicherheitsdokument und ein holographisch optisches Element umfassend ein erfindungsgemäßes versiegeltes holographisches Medium.

Darüber hinaus ist auch die Verwendung eines erfindungsgemäßen holographischen Mediums zur Herstellung von Chipkarten, Ausweisdokumenten, 3D-Bildern, Produktschutzetiketten, Labeln, Banknoten oder holographisch optischen Elementen insbesondere für optische Anzeigen sind Gegenstand der Erfindung.

## Beispiele

Die Erfindung wird im Folgenden anhand von Beispielen näher erläutert.

**Messmethoden:**

| | |
|---|---|
| Festkörpergehalt: | Die angegebenen Festkörpergehalte wurden gemäß DIN EN ISO 3251 bestimmt. |
| Farbzahl: | Die Farbzahl wurde gemäß DIN ISO 6271-2:2002 bestimmt und als Haze ausgewertet. |

**Chemikalien:**

In eckigen Klammern ist jeweils, soweit bekannt, die CAS-Nummer angegeben.

**Rohstoffe der Photopolymerschicht B**

| | |
|---|---|
| Fomrez® UL 28 | Urethanisierungskatalysator, Handelsprodukt der Momentive Performance Chemicals, Wilton, CT, USA. |
| Borchi® Kat 22 | Urethanisierungskatalysator, [85203-81-2] Handelsprodukt der OMG Borchers GmbH, Langenfeld, Deutschland. |
| BYK-310 | Silikonhaltiges Oberflächenadditiv, Produkt der BYK-Chemie GmbH, Wesel, Deutschland. |
| Desmodur® N 3900 | Produkt der Covestro AG, Leverkusen, DE, Hexandiisocyanatbasiertes Polyisocyanat, Anteil an Iminooxadiazindion mindestens 30 %, NCO-Gehalt: 23.5%. |
| CGI-909 | Tetrabutylammonium-tris(3-chlor-4-methylphenyl)-(hexyl)borat, [1147315-11-4], Produkt der BASF SE. |

Farbstoff 1 (3,7-Bis(diethylamino)-phenoxazin-5-ium bis(2-ethylhexyl)sulfobernsteinsäureester) wurde wie in WO 2012062655 beschrieben hergestellt.
Polyol 1 wurde wie in WO2015091427 beschrieben hergestellt.
Urethanacrylat 1 gleichzeitig auch RV 2, (Phosphorothioyltris(oxybenzol-4,1-diylcarbamoyloxy-ethan-2,1-diyl) trisacrylat, [1072454-85-3]) wurde wie in WO2015091427 beschrieben hergestellt.
Urethanacrylat 2, (2-({[3-(Methylsulfanyl)phenyl]carbamoyl}oxy)-ethylprop-2-enoat, [1207339-61-4]) wurde wie in WO2015091427 beschrieben hergestellt.
Additiv 1, Bis(2,2,3,3,4,4,5,5,6,6,7,7-dodecafluorheptyl)-(2,2,4-trimethylhexan-1,6-diyl)biscarbamat [1799437-41-4] wurde wie in WO2015091427 beschrieben hergestellt.

**Rohstoffe der Schicht C**

**Physikalisch trocknende Harze**

| | |
|---|---|
| Desmocoll 406 - Harz 1 | Ein lineares thermoplastisches flexibles Polyurethan der Fa. Covestro Deutschland AG, Leverkusen, Deutschland. |
| Desmocoll 400/3 - Harz 2 | Ein lineares thermoplastisches flexibles Polyurethan der Fa. Covestro Deutschland AG, Leverkusen, Deutschland. |
| Mowital B75H - Harz 3 | Ein lineares thermoplastisches, amorphes Polyvinylbutyral mit einem Mw von 240.000 der Fa. Kuraray Europe GmbH, Hattersheim, Deutschland |
| Degacryl M547 - Harz 4 | Ein lineares thermoplastisches, amorphes Polymethylmethacrylat mit einem Mw von 500.000 der Fa. Evonik Industies, Marl, Deutschland |

**Acrylfunktionelle Reaktivverdünner**

**Abkürzung RV = Reaktivverdünner**

| | |
|---|---|
| DPHA - RV 1 | [29570-58-9] Dipentaerythritolhexaacrylat der Fa, Cytec Surface Specialties, Brussels Belgium. |
| RV 2 | Phosphorothioyltris(oxybenzol-4,1-diylcarbamoyloxyethan-2,1-diyl)trisacrylat, [1072454-85-3]) wurde wie in WO2015091427 beschrieben hergestellt. |
| Sartomer SR444D - RV 3 | [3524-68-3] Pentaerythrittriacrylat (PETIA) der SARTOMER Division der CRAY VALLEY, Paris, France (Arkema Group). |
| Sartomer SR494 - RV 4 | 4-fach ethoxyliertes Pentaerythritoltetraacrylat (PPTTA) der SARTOMER Division der CRAY VALLEY, Paris, France (Arkema Group). |

**Photoinitiatoren**

| | |
|---|---|
| Esacure One - Initiator 1 | [163702-01-0] Oligo-[2-Hydroxy-2-methyl-1-((4-(1-methylvinyl)-phenyl) propanone] der Fa. Lamberti S.p.A., Albizzate, Italien. |
| Irgacure 4265 - Initiator 2 | Eine Mischung von Irgacure® TPO (50% Gew.-%) und Irgacure® 1173 (50% Gew.-%) der Fa. BASF, SE, Ludwigshafen, Deutschland. |

**Additive**

| | |
|---|---|
| BYK 333 - Verlaufsmittel | Silikonhaltiges Oberflächenadditiv der Fa. BYK Chemie GmbH, Wesel, Deutschland |

**Lösemittel**

| | |
|---|---|
| Butylacetat (BA) | Essigsäurebutylester der Brenntag GmbH, Mülheim an der Ruhr, Deutschland. |
| Methoxypropanol (MP-ol) | 1-Methoxy-2-propanol der Brenntag GmbH, Mülheim an der Ruhr, Deutschland. |

**Reinigung des Urethanacrylates 1 (gleichzeitig auch RV 2):** Die 40 %-ige Lösung von Urethanacrylat 1 in Ethylacetat weißt eine Farbzahl von 300 bis 700 Hazen (DIN ISO 6271-2:2002) auf, was für die darauf basierten optischen Lacke nicht akzeptabel ist. Zur Aufreinigung verdünnt man die Lösung mit Cyclohexan und zusätzlichem Ethylacetat, filtriert die resultierende 10%-ige Lösung in einem Lösungsmittelgemisch aus Ethylacetat und Cyclohexan (1.4 zu 1 Gewichtsteile) durch eine Schicht Kieselgel 60 (Fa. Merck) und gewinnt danach die gereinigte ursprüngliche 40 %-ige Lösung in Ethylacetat wieder durch Abdestillieren von Cyclohexan und überschüssigem Ethylacetat. Die so erhaltene Lösung von RV 2 hat eine Farbzahl von 40-50 Hazen.

**Herstellung holographischen Medien (Photopolymerfolie)**

7.90 g der oben beschriebenen Polyol-Komponente wurden aufgeschmolzen und mit 7.65 g des jeweiligen Urethanacylats 2, 2.57 g des oben beschriebenen Urethanacrylats 1, 5.10 g des oben beschriebenen fluorierten Urethans, 0.91 g CGI 909, 0.232 g des Farbstoff 1, 0.230 g BYK 310, 0.128 g Fomrez UL 28 und 3.789 g Ethylacetat gemischt, so dass eine klare Lösung erhalten wurde. Anschließend wurden 1.50 g Desmodur® N 3900 zugegeben und erneut gemischt.

Nun gab man diese Lösung in einer Rolle zu Rolle Beschichtungsanlage auf eine 36 µm dicke PET Folie, wo mittels eines Rakels das Produkt in einer Naßschichtdicke von 19 µm appliziert wurde. Bei einer Trocknungstemperatur von 85 °C und einer Trocknungszeit von 5 Minuten wurde die beschichtete Folie getrocknet und anschließend mit einer 40 µm dicken Polyethylenfolie geschützt. Anschließend wurde dieser Film lichtdicht verpackt.

**Herstellung der latenten Schutzschicht C1 auf Substrat D1 bzw. Schutzschicht C2 auf Substrat D2**

Die in der Tabelle 1 angegebenen Formulierungen wurden derart hergestellt, dass die physikalisch trocknenden Harze, gelöst bei 100 °C in dem angegeben organischem Lösemittel und abgekühlt bis Raumtemperatur, mit den Reaktivverdünner gemischt wurden. Dann wurde im Dunkeln die Photoinitiatoren sowie Verlaufshilfsmittel zugegeben.

**Tab. 1**: Beschichtungsmittel* für die Herstellung der latenten Schutzschicht C

| Probe | Harz | RV | Gewichtsverhältnis Harz / RV | Festkörper (Gew.-%) Lösungsmittel | Viskosität der Lösung bei 23°C [mPas] |
|---|---|---|---|---|---|
| Erfindungsgemäße Beispiele | | | | | |
| C1-01 | 1 | RV 1 | 30/70 | 25% Butylacetat | 170 |
| C1-02 | 2 | RV 2 | 40/60 | 26% Butylacetat | 1120 |
| C2-01 | 3 | RV 3 | 50/50 | 20% 1-Methoxy-2-propanol | 4400 |
| C2-02 | 3 | RV 2 | 20/80 | 28% 1-Methoxy-2-propanol | 950 |
| C2-03 | 4 | RV 4 | 25/75 | 25% 1-Methoxy-2-propanol | 169 |
| C2-04 | 3 | RV 3 | 47/48# | 20% 1-Methoxy-2-propanol | 3020 |
| Nicht erfindungsgemäße Beispiele | | | | | |
| C1-N01 | 2 | RV 5 | 50/50 | 25% Butylacetat | 2220 |
| *Alle Beschichtungsmittel beinhalten Initiator 1 (3.0 Gew.-% zum Festkörper der Lackes), Initiator 2 (1.5 Gew.-% zum Festkörper des Lackes) und Verlaufsmittel (0.2 Gew.-% zum Festkörper des Lackes); #beinhaltet 5 Gew.-% SiO-Nanoteilchen PGM-ST-UP (Fa. Nissan Chemical) | | | | | |

Die Beschichtungsmittel C1-01 und C1-02 für die latente Schutzschicht C1 wurden in einer Rolle zu Rolle Beschichtungsanlage mittels eines Rakels auf eine 36 µm dicke Silikon-modifizierte PET Folie D1 (Hostaphan RN30 2PRK der Fa. Mitsubishi Polyester Film GmbH, Wiesbaden, Deutschland) appliziert. Bei einer Trocknungstemperatur von 85 °C und einer Trocknungszeit von 5 Minuten wurde die beschichtete Folie getrocknet und anschließend mit einer 40 µm dicken Polyethylenfolie geschützt. Beschichtungsdicke betrachtete in der Regel 15-16µm. Anschließend wurde dieser Film lichtdicht verpackt.

Analog wurden die Beschichtungsmittel C2-01, C2-02, C2-03 und C2-04 für die latenten Schutzschicht C2 auf eine 36 µm dicke PET Folie D2 (RNK 36 der Fa. Mitsubishi Polyester Film GmbH, Wiesbaden, Deutschland) appliziert, getrocknet, kaschiert und verpackt. Beschichtungsdicke betrachtete in der Regel 15-16µm.

**Herstellung von Testhologrammen im Folienverbund A-B**

Testhologramme wurden wie folgt vorbereitet: die Photopolymerfolien mit dem Schichtaufbau AB, wurden im Dunkeln auf die gewünschte Größe zurechtgeschnitten und mit Hilfe einer Gummiwalze auf eine Glasplatte der Maße 50 mm x 70 mm (3 mm Dicke) auflaminiert. Die Herstellung von Testhologrammen erfolgt durch eine Testapparatur, die mittels grüner (532nm) Laserstrahlung Denisyuk-Reflektionshologrammen erzeugt. Die Testapparatur besteht aus einer Laserquelle, einem optischen Strahlführungssystem und einer Halterung für die Glascoupons. Die Halterung für die Glascoupons ist mit einem Winkel von 13° relativ zur Strahlachse montiert. Die Laserquelle generierte die Strahlung, die über einen speziellen optischen Strahlengang auf ca. 5 cm aufgeweitet zum Glascoupon geführt wurde, der sich im optischen Kontakt zum Spiegel befand. Das holographierte Objekt war ein ca. 2 cm x 2 cm großer Spiegel, so dass bei der Rekonstruktion des Hologramms die Wellenfront des Spiegels rekonstruiert wurde. Alle Beispiele wurden mit einem grünen 532nm Laser (Newport Corp., Irvine, CA, USA, Best.- Nr. EXLSR-532-50-CDRH) belichtet. Mittels Verschlussblende wurde der Aufzeichnungsfilm definiert für 2 Sekunden belichtet. So entsteht einen Folienverbund A-B* mit einem Hologramm in der Schicht B.

Anschließend wurden die Proben mit der B-Seite zur Lampe hin auf das Förderband eines UV-Strahlers gelegt und mit einer Bahngeschwindigkeit von 2.5 m/min zwei Mal belichtet. Als UV Strahler wurde eine eisendotierte Hg-Lampe vom Typ Fusion UV type "D Bulb" No. 558434 KR 85 mit 80 W / $cm^2$ Gesamtleistungsdichte verwendet. Die Parameter entsprachen einer Dosis von 2 x 2.0 J/$cm^2$ (gemessen mit einem Light Bug des Typs ILT 490). Nach diesem Fixierungsschritt entsteht den Folienverbund A-B'.

**Charakterisierung von Testhologrammen**

Die Hologramme in Schicht B' des Folienverbundes A-B' wurden nun spektroskopisch auf ihre Qualität untersucht.

Die diffraktive Reflexion solcher Hologramme lässt sich aufgrund der hohen Beugungseffizienz des Volumenhologramms mit sichtbarem Licht mit einem Spektrometer (verwendet wird ein Gerät vom Typ USB 2000, Ocean Optics, Dunedin, FL, USA) in Transmission analysieren und erscheint im Transmissionsspektrum als Peak mit reduzierter Transmission $T_{Red}$. Über die Auswertung der Transmissionskurve lässt sich die Qualität des Hologramms nach ISO-Norm 17901-1:2015(E) feststellen, dabei werden die folgenden Messgrößen betrachtet, alle Ergebnisse sind in der Tabelle 3 in der Abschnitt "Spektrale Qualität der Hologramme" - Spalte "in A-B' " zusammengefasst:

$$T_{Red}=100-T_{peak(A-B')}\ (1)$$

Maximale Tiefe des Transmissions-Peaks, dies entspricht der höchsten Beugungseffizienz. Somit dient 100-$T_{peak(A-B')}$ als Maß für die Reflektionskraft (oder sichtbare "Stärke" oder "Qualität") des Hologramms.

FWHM Die Breite des Transmissions-Peaks wird als "Full width at half maximum" (FWHM) in Nanometern (nm) bestimmt.

$\lambda_{peak}$ Spekrale Lage des Transmissionsminimums des Hologramms in Nanometer (nm).

Die Folien mit der Schichtstruktur A-B' wurden dann im erfindungsgemäßen Verfahren mit den zwei aufeinanderfolgenden Schutzschichten C1' und C2' versehen. Die Hologramme wurden danach auch im Schichtaufbau A-B'-C1'-C2* erneut auf ihre Qualität untersucht und mit den ursprünglichen Werten für den Schichtaufbau A-B' verglichen (Tab. 3).

**Herstellung einer Folienverbund mit dem Schichtaufbau A-B'-C1'-C2'**

Die Herstellung eines Folienverbund mit dem Schichtaufbau A-B'-C1'-C2' beinhaltet eine Auflaminierung der Seite B' der Folie A-B' auf die Seite C1 des Folienverbundes C1-D1. Das erfolgt durch Zusammenpressen der beiden Folien zwischen den temperierten Gummiwalzen eines Laminators. Die Temperatur der Walzen wurde auf 30°C, 60° oder 90°C eingestellt. Die hergestellte mehrschichtige Folie wurde bis Raumtemperatur abgekühlt. Dem Folienverbund A-B'-C1-D1 wurde dann die Substratfolie D1 abgezogen. Der Seite C1 des Folienverbundes A-B'-C1 wurde dann die Seite C2 des Folienverbundes C2-D2 in analoger Weise auflaminiert.

Anschließend wurden die Proben A-B'-C1- C2-D2 mit der D2-Seite zur Lampe hin auf das Förderband eines UV-Strahlers gelegt und mit einer Bahngeschwindigkeit von 2,5 m/min zwei Mal belichtet. Als UV Strahler wurde eine eisendotierte Hg-Lampe vom Typ Fusion UV type "D Bulb" No. 558434 KR 85 mit 80 W / $cm^2$ Gesamtleistungsdichte verwendet. Die Parameter entsprachen einer Dosis von 2 x 2,0 $J/cm^2$ (gemessen mit einem Light Bug des Typs ILT 490). Nach dieser Härtungsschritt entsteht den Folienverbund A-B'-C1'- C2'-D2 , dem anschließend noch die Substratfolie D2 abgezogen wird.

<u>COV 17 1 041-Ausland</u>

**Tab. 2:** Übertragbarkeit der Schutzschicht C1 und C2 auf die holographische Folie A-B und die Schutz-Qualität der Beschichtungen C2'

| Probe | Beschichtungsmittel | | $T_{Lam}$ [°C] | Auflaminieren der Schicht C1 auf Schicht B' und Entfernen der Folie D1 | Auflaminieren der Schicht C2 auf Schicht C1, bzw. auf Schicht B' | Entfernbarkeit der Folie D2 von der Schicht C2' | Haftung der Schichtaufbau B'-C1'-C2' bewertet durch Gitterschnitt | Lösemittelbeständigkeit (1h) der Schicht C2' gegen NEP/MEK/Butanol/EA |
|---|---|---|---|---|---|---|---|---|
| | Schicht C1 | Schicht C2 | | | | | | |
| Vergleichsbeispiel | | | | | | | | |
| | ohne | ohne | - | - | - | - | - | 5/5/1/5 (nach 10 min) |
| Erfindungsgemäße Beispiele | | | | | | | | |
| 01-01 | C1-01 | C2-01 | 60 | + | + | + | 1 | 0/0/0/0 |
| 01-02 | C1-01 | C2-01 | 60 | + | + | + | 1 | 0/0/0/0 |
| 01-03 | C1-01 | C2-01 | 60 | + | + | + | 1 | 0/0/0/0 |
| 02-01 | C1-01 | C2-02 | 60 | + | + | + | 0 | 0/0/0/0 |
| 02-02 | C1-01 | C2-02 | 60 | + | + | + | 0 | 0/0/0/0 |
| 02-03 | C1-01 | C2-02 | 60 | + | + | + | 0 | 0/0/0/0 |
| 03-01 | C1-02 | C2-03 | 60 | + | + | + | 1 | 0/1/0/0 |
| 03-02 | C1-02 | C2-03 | 60 | + | + | + | 1 | 0/1/0/0 |
| 04-01 | C1-02 | C2-04 | 60 | + | + | + | 1 | 0/0/0/1 |
| 04-02 | C1-02 | C2-04 | 60 | + | + | + | 1 | 0/0/0/1 |
| Nicht erfindungsgemäße Beispiele | | | | | | | | |
| N01 | C1-N01 | C2-01 | 60 | + | - | | | |
| N02 | C1-01 | kein | 60 | | + | | 0 | 2/4/0/2 |
| N03 | C1-02 | kein | 60 | | + | + | 1 | 4/4/4/4 |
| N04 | kein | C2-01 | 60 | | + | + | 5 | 0/0/0/0 |
| N05 | kein | C2-03 | 60 | | + | + | 1 | 0/0/0/0 |
| N06 | kein | C2-04 | 30 | | + | + | 5 | 0/0/0/0 |

Die Tabelle 2 zeigt, dass alle erfindungsgemäßen Beispiele sich durch zwei aufeinanderfolgenden Laminierungsschritte gut herstellen lassen. Das nicht erfindungsgemäße Beispiel N01 lässt sich nicht herstellen. Nicht erfinderisch aufgebaute Schicht C1 führt dazu, dass das Auflaminieren der Schicht C2 zu keinem Erfolg führt. Weitere erfindungsgemäße Beispiele N02 bis N06 sind diejenigen, die nur eine Schutzschicht aufweisen, entweder nur C1 oder nur C2. Sie alle lassen sich gut herstellen, scheitern aber durch mangelhafte Lösemittelbeständigkeit (N02, N03), Haftung (N04, N06) oder holographische Performance (N05).

**Quantitative Untersuchung der Haftung der Schutzschichten C1' und C2' sowie des Schutzschicht-Verbundes C1'-C2' auf der Schicht B' der holographischen Folie A-B' nach ISO 2409 (Gitterschnitt-Test)**

Es wurde ein Klebebandabriss (verwendetes Klebeband 3M Scotch 898) mit Gitterschnitt (analog zu DIN EN ISO 2409:2013-06) durchgeführt. Die Kennwerte spreiten sich von voller Haftung (Kennwert: 0) bis mangelnder Haftung (Kennwert: 5).

**Bewertung der Lösemittelbeständigkeit der Schutzschicht C2' oder C1'**

Die Lösemittelbeständigkeit der Beschichtungen wurde üblicherweise mit N-Ethyl-2-pyrrolidon (NEP), Methylethylketon (MEK), 1-Butanol und Ethylacetat (EA) in technischer Qualität geprüft. Die Lösemittel wurden mit einem durchnässten Wattebausch auf die Beschichtung aufgetragen und durch Abdecken gegen Verdunstung geschützt. Es wurde, wenn nicht anders beschrieben, eine Einwirkzeit von 60 Minuten bei ca. 23 °C eingehalten. Nach dem Ende der Einwirkzeit wird der Wattebausch entfernt und die Prüffläche mit einem weichen Tuch sauber gewischt. Die Abmusterung erfolgt sofort visuell und nach leichten Kratzen mit dem Fingernagel.

Folgende Stufen werden unterschieden:

- 0 = unverändert; keine Veränderung sichtbar; durch Kratzen nicht verletzbar.
- 1 = leichte Anquellung sichtbar, aber durch Kratzen nicht verletzbar.
- 2 = Veränderung deutlich sichtbar, durch Kratzen kaum verletzbar.
- 3 = merklich verändert nach festem Fingernageldruck oberflächlich zerstört.
- 4 = stark verändert nach festem Fingernageldruck bis zum Untergrund durchgekratzt.
- 5 = zerstört; schon beim Abwischen der Chemikalie wird der Lack zerstört; die Testsubstanz ist nicht entfernbar (eingefressen).

Innerhalb dieser Bewertung wird der Test mit den Kennzahlen 0 und 1 üblicherweise bestanden. Kennwerte > 1 stehen für ein "nicht bestanden".

Wie die entsprechende Spalte der Tabelle 2 zeigt, verzeichnen alle erfindungsgemäßen Beschichtungen C2'ein sehr hohes Maß der Lösemittelbeständigkeit.

Ebenso gute Werte zeigen auch die Proben N04 bis N06, wobei Schicht C2' ohne Zwischenschicht C1' direkt auf A-B' aufgebracht wird. Solche Proben scheitern dann wegen mangelhafter Haftung (N04 und N06) oder holographischer Performance (N05).

Die Proben N02 und N03, wobei die Schichten C1' nicht mit den Schichten C2' bedeckt sind, zeigen keine ausreichende Lösemittelbeständigkeit .

**Charakterisierung von Testhologrammen**

Die Hologramme in der Schicht B' des Folienverbunds A-B', die vor dem Aufbringen jeglicher Schutzschichten vorerst vermessen werden, werden im Folienverbund A-B'-C1'- C2' spektroskopisch nach möglichen Qualitätsverlust untersucht.

COV 17 1 041-Ausland

**Tab. 3:** Qualität der Hologramme, eingeschrieben in A-B-Folienverbund, dann UV-VIS-fixiert, dadurch entsteht der Folienverbund A-B', darauf wird der Folienverbund C1-D1 auflaminiert und D1 entfernt, darauf wird der Folienverbund C2-D2 auflaminiert, dann wird der Folienverbund A-B'-C1-C2-D2 durch UV-Bestrahlung fixiert, und ergibt den Folienverbund A-B'-C1'-C2'-D2 und dann durch Entfernen von D2 den Folienverbund A-B'-C1'-C2'

| Probe | Beschichtungsmittel | | $T_{Lam}$ [°C] | Spektrale Qualität der Hologramme | | | | | | | | | | |
|---|---|---|---|---|---|---|---|---|---|---|---|---|---|---|
| | | | | in A-B' | | | in A-B'-C1'-C2' (nach 1h) | | | | in A-B'-C1'-C2' (nach 3 Tagen) | | | |
| | Schicht C1 | Schicht C2 | | 100-$T_{peak}$ [%] | FWHM [nm] | $\lambda_{peak}$ [nm] | 100-$T_{min}$ [%] | FWH M [nm] | $\lambda_{\pi eak}$ [nm] | $\Delta\lambda_{peak}$ [nm] zu AB' | 100-$T_{peak}$ [%] | FWHM [nm] | $\lambda_{peak}$ [nm] | $\Delta\lambda_{peak}$ [nm] zu A-B' |
| Erfindungsgemäße Beispiele | | | | | | | | | | | | | | |
| 01-01 | C1-01 | C2-01 | 60 | 92.9 | 23.9 | 528 | 85.6 | 18.0 | 533 | 4.5 | 84.1 | 17.3 | 527 | -1.4 |
| 01-02 | C1-01 | C2-01 | 60 | 93.6 | 23.8 | 528 | 89.1 | 17.2 | 536 | 7.9 | 86.6 | 18.9 | 528 | 0.0 |
| 01-03 | C1-01 | C2-01 | 60 | 91.4 | 24.2 | 528 | 89.0 | 17.5 | 536 | 7.9 | 81.1 | 15.7 | 525 | -3.1 |
| 02-01 | C1-01 | C2-02 | 60 | 90.4 | 23.4 | 529 | 88.0 | 19.1 | 535 | 6.6 | 83.8 | 18.8 | 525 | -3.8 |
| 02-02 | C1-01 | C2-02 | 60 | 89.7 | 23.4 | 529 | 89.6 | 18.4 | 539 | 10.1 | 85.5 | 16.8 | 530 | 1.4 |
| 02-03 | C1-01 | C2-02 | 60 | 92.5 | 22.9 | 528 | 89.2 | 18.3 | 534 | 5.9 | 88.0 | 17.9 | 527 | -1.0 |
| 03-01 | C1-02 | C2-03 | 60 | 91.9 | 21.7 | 529 | 90.1 | 18.4 | 538 | 8.6 | 91.2 | 21.3 | 537 | 8.3 |
| 03-02 | C1-02 | C2-03 | 60 | 91.9 | 22.0 | 529 | 93.2 | 19.1 | 538 | 9.0 | 90.7 | 20.8 | 536 | 7.3 |
| 04-01 | C1-02 | C2-04 | 60 | 93.8 | 21.6 | 529 | 92.9 | 19.7 | 532 | 3.1 | 92.4 | 20.5 | 530 | 1.3 |
| 04-02 | C1-02 | C2-04 | 60 | 91.5 | 24.3 | 529 | 94.0 | 19.52 | 536 | 7.3 | 91.9 | 20.6 | 534 | 5.9 |
| Nicht erfindungsgemäße Beispiele | | | | | | | | | | | | | | |
| N01 | C1-N01 | C2-01 | 60 | 93.0 | 19.9 | 529 | - | - | - | - | - | - | - | - |
| N02 | C1-01 | kein | 60 | 90.9 | 24.0 | 528 | 90.5 | 18.6 | 530 | 1.4 | 90.5 | 18.7 | 526 | -2.1 |
| N03 | C1-02 | kein | 60 | 94.3 | 20.9 | 529 | 94.2 | 19.9 | 533 | 4.2 | 91.7 | 19.3 | 532 | 3.1 |
| N04 | kein | C2-01 | 60 | 93.2 | 23.0 | 528 | 88.9 | 19.8 | 544 | 16.3 | 91.9 | 19.9 | 542 | 14.2 |
| N05 | kein | C2-03 | 60 | 79.2 | 20.3 | 529 | 47.0 | 32.5 | 557 | 28.4 | 31.8 | 159.7[#] | 549 | 19.7 |
| N06 | kein | C2-04 | 30 | 91.7 | 22.0 | 526 | 87.4 | 21.9 | 534 | 8.0 | 84.0 | 22.5 | 534 | 7.3 |

"spektraler Peak nicht einheitlich, mehrere zusätzliche Peaks

Die Werte von $T_{Red}$=100-$T_{peak(A-B'-C1'-C2')}$ (2) für die erfindungsgemäßen Beispiele unterscheiden sich von den entsprechenden Werten für A-B' nur minimal und nur in Einzelfällen wird eine Abweichung von ca. 10% beobachtet. Ein großer Verlust der Hologramm-Qualität ist nur für das nichterfindungsgemäße Beispiel N05 zu verzeichnen.

Die gleiche Tendenz betrifft auch die spektrale Lage des Transmissionspeaks $\lambda_{peak}$. Wie die Differenz

$$\Delta\lambda_{peak} = \lambda_{peak(A-B'-C1'-C2')} - \lambda_{peak(A-B')} \quad (3)$$

zeigt, betrifft die Abweichung von $\lambda_{peak}$ nicht mehr als 10 nm. Wesentlich höhere Werte zeigen einige nichterfindungsgemäße Beispiele (N04 und N05).

## Patentansprüche

1. Versiegeltes holographisches Medium umfassend einen Schichtaufbau B'-C1'-C2', wobei B' eine Photopolymerschicht enthaltend ein Volumenhologramm ist, C1' eine durch aktinische Strahlung gehärtete Schutzschicht ist, erhalten durch Umsetzung von

    I) mindestens einem thermoplastischen hauptsächlich linearen und teilkristallinen Polyurethan-Harz C1-I,
    II) mindestens einem multifunktionellen Acrylat-Reaktivverdünner C1-II,
    III) mindestens einem Photoinitiator C1-III, und
    IV) ggf. Hilfs- und Zusatzstoffen, und C2' eine durch aktinische Strahlung gehärtete Schutzschicht ist, erhalten durch Umsetzung von
    I) mindestens einem thermoplastischen Harz C2-I ausgewählt aus der Gruppe bestehend aus Polyvinylbutyral und Polymethylmethacrylat,
    II) mindestens einem multifunktionellen Acrylat-Reaktivverdünner C2-II,
    III) mindestens einem Photoinitiator C2-III, und
    IV) ggf. Hilfs- und Zusatzstoffen,

    wobei die Photopolymerschicht B' durch die Schutzschichten C1' und C2' versiegelt ist.

2. Versiegeltes holographisches Medium nach Anspruch 1, **dadurch gekennzeichnet, dass** der Schichtaufbau aus mindestens vier zumindest teilweise miteinander verbunden Schichten besteht, wobei die Schichten in der Reihenfolge Substratschicht A, Photopolymerschicht B', gehärtete Schutzschicht C1' und gehärtete Schutzschicht C2' unmittelbar aufeinander angeordnet sind.

3. Versiegeltes holographisches Medium nach Anspruch 1, **dadurch gekennzeichnet, dass** der Schichtaufbau aus mindestens vier zumindest teilweise miteinander verbunden Schichten besteht, wobei die Schichten in der Reihenfolge Photopolymerschicht B', gehärtete Schutzschicht C1', gehärtete Schutzschicht C2' und Substratschicht D2 unmittelbar aufeinander angeordnet sind.

4. Versiegeltes holographisches Medium nach einem der vorhergehenden Ansprüche, **dadurch gekennzeichnet, dass** der Schichtaufbau aus mindestens fünf zumindest teilweise miteinander verbunden Schichten besteht, wobei die Schichten in der Reihenfolge Substratschicht A, Photopolymerschicht B', gehärtete Schutzschicht C1', gehärtete Schutzschicht C2' und Substratschicht D2 unmittelbar aufeinander angeordnet sind.

5. Verfahren zur Herstellung eines versiegelten holographischen Mediums nach einem der Ansprüche 1-4, **dadurch gekennzeichnet, dass** zunächst eine ungehärtete Schutzschicht C1 auf eine Photopolymerschicht B', welche ein Volumenhologramm enthält, aufgebracht wird, um einen Schichtverbund B'-C1 zu ergeben, in einem weiteren Schritt eine ungehärtete Schutzschicht C2 auf die Schutzschicht C1 aufgebracht wird, um einen Schichtverbund B'-C1-C2 zu ergeben, und danach der Schichtverbund B'-C1-C2 mit aktinischer Strahlung gehärtet wird, um eine Schichtverbund B'-C1'-C2' zu ergeben, wobei C1' und C2' die gehärteten Schutzschichten C1 bzw. C2 sind, wobei die ungehärtete Schutzschicht C1

    I) mindestens ein thermoplastisches hauptsächlich lineares und teilkristallines Polyurethan-Harz C1-I,
    II) mindestens einen multifunktionellen Acrylat-Reaktivverdünner C1-II,
    III) mindestens einen Photoinitiator C1-III, und
    IV) ggf. Hilfs- und Zusatzstoffe umfasst; und

die ungehärtete Schutzschicht C2

I) mindestens ein thermoplastisches Harz C2-I ausgewählt aus der Gruppe bestehend aus Polyvinylbutyral und Polymethylmethacrylat,
II) mindestens einen multifunktionellen Acrylat-Reaktivverdünner C2-II,
III) mindestens einen Photoinitiator C2-III, und
IV) ggf. Hilfs- und Zusatzstoffe umfasst.

**6.** Verfahren nach Anspruch 5, **dadurch gekennzeichnet, dass** in einem ersten Schritt ein Schichtverbund A-B' bereit gestellt wird, wobei A eine Substratschicht ist und B' eine Photopolymerschicht, welche ein Volumenhologramm enthält, in einem zweiten Schritt die ungehärtete Schutzschicht C1 auf einer Substratschicht D1 aufgebracht wird, um einen Schichtverbund C1-D1 zu ergeben, in einem dritten Schritt der Schichtverbund A-B' mit dem Schichtverbund C1-D1 flächig verbunden wird um einen Schichtverbund A-B'-C1-D1 zu ergeben, wobei die Schichtverbund A-B' mit dem Schichtverbund C1-D1 vorzugsweise durch Laminierung verbunden wird, in einem vierten Schritt die Substratschicht D1 von dem Schichtverbund A-B'-C1-D1 entfernt wird um einen Schichtverbund A-B'-C1 zu ergeben, in einem fünften Schritt die ungehärtete Schutzschicht C2 auf einer Substratschicht D2 aufgebracht wird, um einen Schichtverbund C2-D2 zu ergeben, in einem sechsten Schritt der Schichtverbund A-B'-C1 mit dem Schichtverbund C2-D2 flächig verbunden wird um einen Schichtverbund AB'-C1-C2-D2 zu ergeben, wobei die Schichtverbund A-B'-C1 mit dem Schichtverbund C2-D2 vorzugsweise durch Laminierung verbunden wird, in einem siebten Schritt der Schichtverbund A-B'-C1-C2-D2 mit aktinischer Strahlung gehärtet wird, um einen Schichtverbund A-B'-C1'-C2'-D2 zu ergeben.

**7.** Verfahren nach Anspruch 6, **dadurch gekennzeichnet, dass** in einem achten Schritt die Substratschicht D2 von dem Schichtverbund A-B'-C1'-C2'-D2 entfernt wird um einen Schichtverbund A-B'-C1'-C2' zu ergeben.

**8.** Kit-of-parts zur Herstellung eines versiegelten holographischen Mediums nach Anspruch 1, enthaltend mindestens eine ungehärtete Schutzschicht C1, mindestens eine ungehärtete Schutzschicht C2 und eine flächig vorliegende Photopolymerschicht B', welche ein Volumenhologramm enthält, wobei die Schutzschichten C1 und C2 unterschiedlich sind, wobei die Schutzschicht C1

I) mindestens ein thermoplastisches hauptsächlich lineares und teilkristallines Polyurethan-Harz Cl-I,
II) mindestens einen multifunktionellen Acrylat-Reaktivverdünner C1-II,
III) mindestens einen Photoinitiator C1-III, und
IV) ggf. Hilfs- und Zusatzstoffe umfasst

und die Schutzschicht C2

I) mindestens ein thermoplastisches Harz C2-I ausgewählt aus der Gruppe bestehend aus Polyvinylbutyral und Polymethylmethacrylat,
II) mindestens einen multifunktionellen Acrylat-Reaktivverdünner C2-II,
III) mindestens einen Photoinitiator C2-III, und
IV) ggf. Hilfs- und Zusatzstoffe umfasst.

**9.** Kit-of-parts nach Anspruch 8, **dadurch gekennzeichnet, dass** die Photopolymerschicht B' auf einer Substratschicht A vorliegt, wobei die Photopolymerschicht B' auf einer Seite zumindest teilweise mit der Substratschicht A verbunden ist.

**10.** Kit-of-parts nach Anspruch 8, **dadurch gekennzeichnet, dass** die ungehärtete Schutzschicht C1 auf einer Substratschicht D1 vorliegt, wobei die Schutzschicht C1 auf einer Seite zumindest teilweise mit der Substratschicht D1 verbunden ist, und die ungehärtete Schutzschicht C2 auf einer Substratschicht D2 vorliegt, wobei die Schutzschicht C2 auf einer Seite zumindest teilweise mit der Substratschicht D2 verbunden ist.

**11.** Verwendung des Kit-of-parts nach einem der Ansprüche 8-10 für das Verfahren nach einem der Ansprüche 5-7.

**12.** Optische Anzeige, umfassend ein versiegeltes holographisches Medium nach einem der Ansprüche 1-4, wobei die optische Anzeige ausgewählt ist aus der Gruppe bestehend aus Autostereoskopische und/oder holographische Displays, Projektionsleinwände, Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted

Displays, Leuchtsymbole, Warnlampen, Signallampen, Scheinwerfer und Schautafeln.

**13.** Sicherheitsdokument, umfassend ein versiegeltes holographisches Medium nach einem der Ansprüche 1-4.

## Claims

**1.** Sealed holographic medium comprising a layer construction B'-C1'-C2', wherein B' is a photopolymer layer containing a volume hologram, C1' is a protective layer cured by actinic radiation obtained by reaction of

I) at least one thermoplastic mainly linear and semicrystalline polyurethane resin C1-I,
II) at least one multifunctional acrylate reactive diluent C1-II,
III) at least one photoinitiator C1-III and
IV) optionally assistant and added substances and

C2' is a protective layer cured by actinic radiation, obtained by reaction of

I) at least one thermoplastic resin C2-I selected from the group consisting of polyvinyl butyral and polymethyl methacrylate,
II) at least one multifunctional acrylate reactive diluent C2-II,
III) at least one photoinitiator C2-III and
IV) optionally assistant and added substances,

wherein the photopolymer layer B' is sealed by the protective layers CI' and C2'.

**2.** Sealed holographic medium according to Claim 1, **characterized in that** the layer construction consists of at least four layers at least partly joined to one another, wherein the layers are arranged directly atop one another in the sequence substrate layer A, photopolymer layer B', cured protective layer C1' and cured protective layer C2'.

**3.** Sealed holographic medium according to Claim 1, **characterized in that** the layer construction consists of at least four layers at least partly joined to one another, wherein the layers are arranged directly atop one another in the sequence photopolymer layer B', cured protective layer C1', cured protective layer C2' and substrate layer D2.

**4.** Sealed holographic medium according to any of the preceding claims, **characterized in that** the layer construction consists of at least five layers at least partly joined to one another, wherein the layers are arranged directly atop one another in the sequence substrate layer A, photopolymer layer B', cured protective layer C1', cured protective layer C2' and substrate layer D2.

**5.** Process for producing a sealed holographic medium according to any of Claims 1-4**, characterized in that** initially an uncured protective layer C1 is applied atop a photopolymer layer B' containing a volume hologram to afford a layer composite B'-C1, in a further step an uncured protective layer C2 is applied atop the protective layer C1 to afford a layer composite B'-C1-C2 and subsequently the layer composite B'-C1-C2 is cured with actinic radiation to obtain a layer composite B'-C1'-C2', wherein C1' and C2' are the cured protective layers C1 and C2 respectively, wherein the uncured protective layer C1 comprises

I) at least one thermoplastic mainly linear and semicrystalline polyurethane resin C1-I,
II) at least one multifunctional acrylate reactive diluent C1-II,
III) at least one photoinitiator C1-III and
IV) optionally assistant and added substances; and

the uncured protective layer C2 comprises

I) at least one thermoplastic resin C2-I selected from the group consisting of polyvinyl butyral and polymethyl methacrylate,
II) at least one multifunctional acrylate reactive diluent C2-II,
III) at least one photoinitiator C2-III and
IV) optionally assistant and added substances.

**6.** Process according to Claim 5, **characterized in that** in a first step a layer composite A-B' is provided, wherein A is a substrate layer and B' is a photopolymer layer containing a volume hologram, in a second step the uncured protective layer C1 is applied atop a substrate layer D1 to afford a layer composite C1-D1, in a third step the layer composite A-B' is areally joined to the layer composite C1-D1 to afford a layer composite A-B'-C1-D1, wherein the layer composite A-B' is preferably joined to the layer composite C1-D1 by lamination, in a fourth step the substrate layer D1 is removed from the layer composite A-B'-C1-D1 to afford a layer composite A-B'-C1, in a fifth step the uncured protective layer C2 is applied atop a substrate layer D2 to afford a layer composite C2-D2, in a sixth step the layer composite A-B'-C1 is areally joined to the layer composite C2-D2 to afford a layer composite A-B'-C1-C2-D2, wherein the layer composite A-B'-C1 is preferably joined to the layer composite C2-D2 by lamination, in a seventh step the layer composite A-B'-C1-C2-D2 is cured with actinic radiation to afford a layer composite A-B'-C1'-C2'-D2.

**7.** Process according to Claim 6, **characterized in that** in an eighth step the substrate layer D2 is removed from the layer composite A-B'-C1'-C2'-D2 to afford a layer composite A-B'-C1'-C2'.

**8.** Kit of parts for producing a sealed holographic medium according to Claim 1 containing at least one uncured protective layer C1, at least one uncured protective layer C2 and a flat photopolymer layer B' which contains a volume hologram, wherein the protective layers C1 and C2 are different, wherein the protective layer C1 comprises I) at least one thermoplastic mainly linear and semicrystalline polyurethane resin C1-I,

II) at least one multifunctional acrylate reactive diluent C1-II,
III) at least one photoinitiator C1-III and
IV) optionally assistant and added substances
and the protective layer C2 comprises
I) at least one thermoplastic resin C2-I selected from the group consisting of polyvinyl butyral and polymethyl methacrylate,
II) at least one multifunctional acrylate reactive diluent C2-II,
III) at least one photoinitiator C2-III and
IV) optionally assistant and added substances.

**9.** Kit of parts according to Claim 8, **characterized in that** the photopolymer layer B' is disposed on a substrate layer A, wherein the photopolymer layer B' is on one side at least partly joined to the substrate layer A.

**10.** Kit of parts according to Claim 8, **characterized in that** the uncured protective layer C1 is disposed on a substrate layer D1, wherein the protective layer C1 is on one side at least partly joined to the substrate layer D1, and the uncured protective layer C2 is disposed on a substrate layer D2, wherein the protective layer C2 is on one side at least partly joined to the substrate layer D2.

**11.** Use of the kit of parts according to any of Claims 8-10 for the process according to any of Claims 5-7.

**12.** Optical display comprising a sealed holographic medium according to any of Claims 1-4, wherein the optical display is selected from the group consisting of autostereoscopic and/or holographic displays, projection screens, displays with switchable restricted emission characteristics for privacy filters and bidirectional multiuser screens, virtual displays, head-up displays, head-mounted displays, illumination symbols, warning lamps, signal lamps, floodlights/headlights and display panels.

**13.** Security document comprising a sealed holographic medium according to any of Claims 1-4.

**Revendications**

**1.** Support holographique scellé comprenant une structure stratifiée B'-C1'-C2', B' étant une couche de photopolymère contenant un hologramme volumique, C1' étant une couche de protection durcie par un rayonnement actinique, obtenue par la transformation de

I) au moins une résine de polyuréthane thermoplastique, principalement linéaire et partiellement cristalline C1-I,
II) au moins un diluant réactif d'acrylate multifonctionnel C1-II,
III) au moins un photo-initiateur C1-III et
IV) le cas échéant des adjuvants et des additifs et

C2' étant une couche de protection durcie par un rayonnement actinique, obtenue par la transformation de

I) au moins une résine thermoplastique C2-I choisie dans le groupe constitué par le polyvinylbutyral et le poly(méthacrylate de méthyle),
II) au moins un diluant réactif d'acrylate multifonctionnel C2-II,
III) au moins un photo-initiateur C2-III et
IV) le cas échéant des adjuvants et des additifs,

la couche de photopolymère B' étant scellée par les couches de protection C1' et C2'.

**2.** Support holographique scellé selon la revendication 1, **caractérisé en ce que** la structure stratifiée est constituée par au moins quatre couches au moins partiellement reliées les unes aux autres, les couches étant agencées directement les unes sur les autres dans l'ordre : couche de substrat A, couche de photopolymère B', couche de protection durcie C1' et couche de protection durcie C2'.

**3.** Support holographique scellé selon la revendication 1, **caractérisé en ce que** la structure stratifiée est constituée par au moins quatre couches au moins partiellement reliées les unes aux autres, les couches étant agencées directement les unes sur les autres dans l'ordre : couche de photopolymère B', couche de protection durcie C1', couche de protection durcie C2' et couche de substrat D2.

**4.** Support holographique scellé selon l'une des revendications précédentes, **caractérisé en ce que** la structure stratifiée est constituée par au moins cinq couches au moins partiellement reliées les unes aux autres, les couches étant agencées directement les unes sur les autres dans l'ordre : couche de substrat A, couche de photopolymère B', couche de protection durcie C1', couche de protection durcie C2' et couche de substrat D2.

**5.** Procédé de fabrication d'un support holographique scellé selon l'une des revendications 1-4, **caractérisé en ce qu'**une couche de protection non durcie C1 est d'abord appliquée sur une couche de photopolymère B', qui contient un hologramme volumique, afin d'obtenir un composite stratifié B'-C1, dans une autre étape, une couche de protection non durcie C2 est appliquée sur la couche de protection C1, afin d'obtenir un composite stratifié B'-C1-C2 et le composite stratifié B'-C1-C2 est ensuite durci à l'aide d'un rayonnement actinique afin d'obtenir un composite stratifié B'-C1'-C2', C1' et C2' étant les couches de protection durcies C1 ou, selon le cas, C2, la couche de protection non durcie C1 comprenant

I) au moins une résine de polyuréthane thermoplastique, principalement linéaire et partiellement cristalline C1-I,
II) au moins un diluant réactif d'acrylate multifonctionnel C1-II,
III) au moins un photo-initiateur C1-III et
IV) le cas échéant des adjuvants et des additifs ; et

la couche de protection non durcie C2 comprenant

I) au moins une résine thermoplastique C2-I choisie dans le groupe constitué par le polyvinylbutyral et le poly(méthacrylate de méthyle),
II) au moins un diluant réactif d'acrylate multifonctionnel C2-II,
III) au moins un photo-initiateur C2-III et
IV) le cas échéant des adjuvants et des additifs.

**6.** Procédé selon la revendication 5, **caractérisé en ce que**, dans une premier étape, un composite stratifié A-B' est préparé, A étant une couche de substrat et B' étant une couche de photopolymère qui contient un hologramme volumique, dans une deuxième étape, la couche de protection non durcie C1 est appliquée sur une couche de substrat D1 afin d'obtenir un composite stratifié C1-D1, dans une troisième étape, le composite stratifié A-B' est relié de manière surfacique au composite stratifié C1-D1 afin d'obtenir composite stratifié A-B'-C1-D1, le composite stratifié A-B' étant de préférence relié au composite stratifié C1-D1 par laminage, dans une quatrième étape, la couche de substrat D1 est enlevée du composite stratifié A-B'-C1-D1 afin d'obtenir un composite stratifié A-B'-C1, dans une cinquième étape, la couche de protection non durcie C2 est appliquée sur un composite stratifié D2 afin d'obtenir un composite stratifié C2-D2, dans une sixième étape, le composite stratifié A-B'-C1 est relié de manière surfacique au composite stratifié C2-D2 afin d'obtenir un composite stratifié A-B'-C1-C2-D2, le composite stratifié A-B'-C1 étant de préférence relié au composite stratifié C2-D2 par laminage, dans une septième étape, le composite stratifié A-B'-C1-C2-D2 est durci par un rayonnement actinique, afin d'obtenir un composite stratifié A-B'-C1'-C2'-D2.

**7.** Procédé selon la revendication 6, **caractérisé en ce que**, dans une huitième étape, la couche de substrat D2 est enlevée du composite stratifié A-B'-C1'-C2'-D2 afin d'obtenir un composite stratifié A-B'-C1'-C2'.

**8.** Kit de parties pour la fabrication d'un support holographique scellé selon la revendication 1, contenant au moins une couche de protection non durcie C1, au moins une couche de protection non durcie C2 et une couche de photopolymère B' plane, qui contient un hologramme volumique, les couches de protection C1 et C2 étant différentes, la couche de protection C1 comprenant I)
au moins une résine de polyuréthane thermoplastique, principalement linéaire et partiellement cristalline C1-I,

II) au moins un diluant réactif d'acrylate multifonctionnel C1-II,
III) au moins un photo-initiateur C1-III et
IV) le cas échéant des adjuvants et des additifs
et la couche de protection C2 comprenant
I) au moins une résine thermoplastique C2-I choisie dans le groupe constitué par le polyvinylbutyral et le poly(méthacrylate de méthyle),
II) au moins un diluant réactif d'acrylate multifonctionnel C2-II,
III) au moins un photo-initiateur C2-III et
IV) le cas échéant des adjuvants et des additifs.

**9.** Kit de parties selon la revendication 8, **caractérisé en ce que** la couche de photopolymère B' se trouve sur une couche de substrat A, la couche de photopolymère B' étant reliée sur une face au moins partiellement à la couche de substrat A.

**10.** Kit de parties selon la revendication 8, **caractérisé en ce que** la couche de protection non durcie C1 se trouve sur une couche de substrat D1, la couche de protection C1 étant reliée sur au moins une face au moins partiellement à la couche de substrat D1 et la couche de protection non durcie C2 sur trouvant sur une couche de substrat D2, la couche de substrat C2 étant reliée sur une face au moins partiellement à la couche de substrat D2.

**11.** Utilisation du kit de partie selon l'une des revendications 8-10 pour le procédé selon l'une des revendications 5-7.

**12.** Affichage optique, comprenant un support holographique scellé selon l'une des revendications 1-4, l'affichage optique étant préférablement choisi dans le groupe constitué par les affichages autostéréoscopiques et/ou holographiques, les écrans de projection, les panneaux de projection, les affichages présentant un comportement d'émission limité commutable pour les filtres de confidentialité et les écrans bidirectionnels multi-utilisateurs, les écrans virtuels, les affichages tête haute, les affichages pour visiocasque, les symboles lumineux, les lampes d'avertissement, les lampes de signalisation, les projecteurs et les tableaux.

**13.** Document de sécurité, comprenant un support holographique scellé selon l'une des revendications 1-4.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011054797 A
- WO 2011067057 A
- EP 2613318 B1
- JP 2006023455 A
- JP 2006023456 A
- US 4994347 A
- EP 0223587 A
- WO 2012062655 A
- US 2012062658 A
- DE 3729068 A1
- DE 3702394 A1
- US 20050112971 A1
- WO 2015091427 A


### In der Beschreibung aufgeführte Nicht-Patentliteratur


- **CUNNINGHAM et al.** *RadTech'98 North America UV/EB Conference Proceedings, Chicago, Apr. 19-22, 1998*, 19 April 1998
- Chemistry & Technology of UV & EB Formulations For Coatings, Inks & Paints. SITA Technology, 1991, vol. 3, 61-328
- Kunststoff-Handbuch. Carl Hanser Verlag, 1993, vol. 7